(19)

Europäisches
Patentamt
European
Patent Office
Office européen
des brevets

(11) **EP 2 365 447 A1**

(12) **EUROPEAN PATENT APPLICATION**

(43) Date of publication:
**14.09.2011 Bulletin 2011/37**

(51) Int Cl.:
***G06F 17/30*** *(2006.01)*

(21) Application number: **10250453.7**

(22) Date of filing: **11.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: British Telecommunications
**London EC1A 7AJ (GB)**

(72) Inventor: **The designation of the inventor has not yet been filed**

(74) Representative: **Williamson, Simeon Paul et al**
**BT Group Legal**
**Intellectual Property Department**
**PP C5A, BT Centre**
**81 Newgate Street**
**London**
**EC1A 7AJ (GB)**

(54) **Data integration system**

(57)    A data integration system (100, 10-14) comprises a plurality of data sources (10-14) and a mapping system (120, 121, 122, 125, 126, 127, 128) for providing mapping between the data sources (10-14) and a global ontology. The global ontology comprises a plurality of elements including at least a plurality of concepts, at least some of which include one or more attributes. The data integration system further comprises a user interface (110). The user interface (110 is operable in use to provide an integrated, global view of the data contained in the data sources (10-14) and to permit a user to interact with the data sources (10-14) using the global ontology. The mapping system (120) includes a schema mapping portion (122) and a semantic identifier portion (127), wherein the schema mapping portion (127) includes a plurality of single data source element mappings each of which specifies how one or more elements from a single data source map to one or more elements of the global ontology, and the semantic identifier portion (127) comprises a plurality of semantic identifiers each of which is operable to specify in terms of the global ontology how to identify and merge duplicate rough instances of concepts of the global ontology derived from queries to the possibly heterogeneous data sources, which duplicate rough instances represent the same actual instances.

Figure 2

EP 2 365 447 A1

## Description

### Field of the Invention

The present invention relates to a data integration system and a corresponding method of integrating data from heterogeneous data sources, most particularly semantically heterogeneous data sources.

### Background to the Invention

There is a generally recognised problem often referred to as data overload and information poverty. This refers to the fact that although there is a vast amount of data stored in databases throughout the world at the present time, accessing and processing the data from various different databases, even where the are linked together by an appropriate data network, in order to obtain useful information from the databases is not straightforward. Furthermore, from an enterprise perspective, different parts of an enterprise (especially of a typical modern large enterprise) store, manage and search though their data using different database management systems. Competition, evolving technology, mergers, acquisitions, geographic distribution, outsourcing and the inevitable decentralization of growth all contribute to this diversity. Yet is only by combining the information from these systems that enterprises can realize the full value of the data they contain. Most of that information is stored in different relational database management systems (RDBMs), but often from different manufacturers and designers.

There has been much research into the field of Data Integration. A paper by Patrick Ziegler and Klaus R. Dittrich (2004) entitled "Three Decades of Data Integration - All Problems Solved?" published in the proceedings of the World Computer Congress 2004 - WCC 2004, 3-12, provides a good overview of research into this field and explains how there are many different architectural levels at which integration between heterogeneous data sources may be attempted. For example, at the lowest level it may be attempted by combining the data at the data storage level - this involves migrating the data from a plurality of separate data sources to a single database with a single interface for querying the database. Towards the other extreme, a user could be provided with a common user interface, but the underlying data remains transparently located in separate databases and the user must combine the information from the different databases him/herself.

The present applicant has previously developed a number of data integration systems of increasing complexity. For example, in the system described in WO 02/080028, a plurality of heterogeneous data sources to be combined are maintained as separate databases and a series of wrappers are used to interface between the databases themselves and the system. The wrappers also translate or map queries expressed in a "resource" ontology to the query language/ schema supported by the underlying resource (i.e. the underlying database). The system then uses a series of ontology to ontology maps between the resource ontology and a single global ontology (or alternatively a more specialised, application-specific ontology) which the user uses to formulate global queries. In general, this basic approach (of keeping the underlying resources largely unchanged, but providing mapping capabilities to map between each of the underlying resources and a common unified view of the data expressed in terms of a single ontology which is used by the user for viewing the data, making queries, updating the data, etc.) has then been followed by the present applicant and other workers in this field with considerable success.

However, to the best of the applicant's knowledge, the issue of how best to structure the numerous mappings that such systems require has not been satisfactorily addressed. In general, the mappings are assumed to be created manually or semi-automatically and are envisaged as simple mappings which express how to create an appropriate instance for an attribute of a concept in the global ontology from a particular database resource or resources. This is fine for answering simple queries in respect of relatively simple databases as is typically done for generating prototype data integration systems. However, when an attempt is made to employ such simple mappings in real world data integration systems, a number of issues arise which have not been properly addressed in the mapping solutions provided to date.

One such issue is the question of how such mappings should be created and coordinated. For example, if two different experts each of which is associated with his/her own database generates a mapping from their database to a particular global ontology, how should these mappings be used. Should they be used independently or should they be combined together in some way, and if so how? What if the databases to which they map have overlapping content (i.e. if the same actual thing or instance appears independently in different databases - is there some way of preventing a single instance appearing in the global ontology view as separate instances)? Previous solutions have tended to address such problems on a very ad hoc basis, if at all.

### Summary of the Invention

According to a first aspect of the present invention, there is provided a data integration system comprising: a plurality of data sources; a mapping system for providing mapping between the data sources and a global ontology, the global ontology comprising a plurality of elements including at least a plurality of concepts, at least some of which include one or more attributes; and a user interface; wherein the user interface is operable in use to provide an integrated, global view of the data contained in the data sources and to permit a user to interact with the data sources using the global ontology; and wherein the mapping system includes a schema mapping portion and a semantic identifier portion, wherein the schema mapping portion includes a plurality of single data source element mappings each of which specifies how one or more elements from a single data source map to one or more elements of the global ontology, and the semantic identifier portion comprises a plurality of semantic identifiers each of which is operable to specify in terms of the global ontology how to identify and merge duplicate rough instances of concepts of the global ontology derived from queries to heterogeneous data sources, which represent the same actual instances.

In other words, the present invention provides a system by which a user can get a unified view over all of the data stored in a number of heterogeneous data sources by which he or she (or it in the case of autonomous software applications) can perform queries and obtain the results of those queries in a single consistent terminology because of a mapping between the global ontology (which provides the consistent terminology for the user to use) and the various different database schemas etc. used by the underlying data sources. Moreover, the mapping has a semantic identifier portion which specifies, in terms of the global ontology, how to identify duplicate instances and then how to merge them together into a single instance for use in the global view, etc. (Duplicate instances (or duplicate rough instances as they are henceforth called) typically result from the same instance of a concept being retrieved from different data sources which both happen to store details of the same actual instance of a thing - e.g. one database might store details of all routers owned by a company with details of who should be contacted in the event of a fault occurring, etc. whilst another database might store details of deployed routers and information about the other routers to which it is connected and the various different protocols its using etc. - clearly there is likely to be considerable overlap between these databases and many individual routers will be duplicated (i.e. appear in both databases) and such duplication needs to be identified by the semantic identifier and then resolved or merged into a single instance). This approach of mapping to all underlying databases but including semantic identifiers to permit duplications to be detected and merged provides a powerful data integration system which is easily manageable and can efficiently grow as new underlying data sources are integrated into the system. In general, the process by which underlying data sources are integrated into the system typically involves an expert in the new data source to be added generating a mapping between the data source to be added and the global ontology (e.g. as a set of single data source element mappings which are discussed in greater detail below); and then adding this mapping to the existing general mapping and then amending the existing semantic identifiers as required to accommodate the newly added data source (which job is probably best performed by a general expert of the integrated system).

Preferably the data sources are heterogeneous relational databases. By heterogeneous, it is meant merely that the semantics or format of the data stored in the databases is not identical. For example, if one database stores the name of the manufacturer of a network device in a column called "Vendor" whilst another database stores the same information in a column called "Brand" this would be an example of heterogeneous databases; similarly, if one database stored the information (i.e. the manufacturer's name) only as part of a greater piece of information comprising both the manufacturer's name and the name of the model (e.g. in a column called "model type") whilst another database stored this information in two separate columns (e.g. "manufacturer's name" and another, also perhaps called "model type") then this would be another example of heterogeneous databases. They could, of course, also be different in other ways, e.g. they could relate to completely different types of database such as relational databases and object oriented databases or semi-structured databases such as databases of XML documents or documents marked up in some other way, etc.

Preferably, the results of any queries (both before and after translation to the global ontology) are stored as tables in a relational database format. This enables mature relational database management software techniques to be used to process the data.

The use of the term global ontology is not meant to imply that there can only ever be one single global ontology for all applications, but rather that at any one time, the user only needs to interact using a single ontology for accessing all of the data stored in the underlying data sources. However, for different "global" ontologies, it may be necessary to have different mappings (either between a common global ontology and a specialist one, or different single data source element mappings, and different semantic identifiers, etc.).

The system may have a direct user interface to permit a user to enter queries etc., using a screen, keyboard and mouse, etc., or the system may include a system interface to permit other applications to submit queries and receive responses etc. instead of, or on behalf of, a user. In the case where a software application interacts with the system autonomously, that application may be considered as being the user (i.e. the user need not be a human user). One example of using an indirect user interface is where the system communicates with a web server which exposes the functionality of the system to multiple users via a client server arrangement (e.g. where clients access the functionality using web browsers running on their local machines and communicating with the web server over a network such as a company intranet).

Preferably, the single data source element mappings are modular. The term modular is used to indicate that the element being so qualified does not need to have any interaction with (or knowledge of) any other element which is also "modular" (or at least "relatively" modular thereto - see below). For example, one single data source element mapping can be created and used entirely independently of any other single data source element mapping. This is a great advantage as it enables such mappings to be generated by separate individuals, at different or at the same or at overlapping times and without any cooperation or common understanding etc. In this way, an "expert" for one database can create the single data source element mappings for that database whilst other experts of other databases can create the single data source element mappings for those other databases. Since the semantic identifier is expressed solely in terms of the global ontology, yet another "expert" (e.g. an expert of the global ontology) can create the semantic identifier, again without requiring any specialist knowledge of the format/schema of any of the underlying data sources from which the data is actually coming, and can also therefore be considered as being modular with respect to the single data source element mappings.

Preferably, the semantic identifier includes a classification function for identifying rough instances as relating to the same actual instance and a merging function for combining together the information associated with such duplicate rough instances identified by the classification function as corresponding to the same actual instance, so as to form a single actual instance.

Preferably the single data source element mappings include single data source concept mappings which map a particular concept in the global ontology to information contained in a single data source. Furthermore, in preferred embodiments, the schema mapping portion also includes a relation mapping capability, preferably by having a capability to include a plurality of single data source relation mappings as comprising at least some of the single data source element mappings. The use of relation mappings enables relations expressed in the global ontology to also be explicitly mapped to the underlying data sources such that instances of relations in the global ontology may also be obtained in the same way as instances of concepts in the ontology. The use of relations in ontologies greatly enhances the power of ontologies especially in terms of the ability of automatic reasoners to infer useful information based on the ontology, and so the ability to use ontology relations and to map them directly to underlying data sources greatly enhances the power of the data integration system as a whole.

Preferably, the schema mapping portion has a hierarchical structure comprising three distinct levels of hierarchy in which distinct elements residing at the same level are "relatively modular" in the sense that they can therefore be built and modified independently and concurrently, although elements in one of the higher levels of the hierarchy may rely on (and in fact may consist of) elements in the hierarchical level immediately beneath it. Preferably the highest level of the hierarchy includes the schema mapping portion as a first element and a plurality of semantic identifiers as additional elements each of which identifies and merges overlapping rough instances of the same concept of the ontology. Preferably, each semantic identifier includes two sub-elements each of which is located at the second level of the hierarchy, the two sub-elements being a classification function and a merging function. Preferably, the schema mapping portion comprises a plurality of concept mappings, each of which relates to a single concept in the global ontology, and a plurality of relation mappings, each of which relates to a single relation in the global ontology, (all of) the concept and relation mappings being relatively modular with respect to one another. Preferably, each concept mapping comprises a plurality of single data-source concept mappings, each of which relates to a single concept and a single data-source and each relation mappings comprises a plurality of single data-source relation mappings each of which relates to a single data-source and a single relation. Preferably, (all of) the single data-source concept and relation mappings are relatively modular with respect to one another and they constitute the third hierarchical level of the schema mapping portion.

According to a second aspect of the present invention, there is provided a method of integrating data from a plurality of heterogeneous data sources and of executing user entered queries, the method comprising: receiving a user query composed in terms of a global ontology, translating the query into a plurality of data source specific queries using a mapping system, querying the respective data sources, translating the results of the queries into the global ontology using the mapping system, identifying and merging duplicate rough instances of concepts of the global ontology resulting from the queries using a predefined semantic identifier expressed in terms of the global ontology and presenting the results of the queries to the user after merging of duplicate rough instances; wherein the mapping system includes a schema mapping portion and a plurality of semantic identifiers, wherein the schema mapping portion includes a plurality of single data source element mappings each of which specifies how one or more elements from a single data source map to an element of the global ontology, and wherein each semantic identifier is operable to specify in terms of the global ontology how to identify and merge duplicate rough instances of concepts of the global ontology derived from separate queries to the data sources.

Further aspects of the present invention relate to carrier means, especially tangible carrier means such as a magnetic or optical disk or a solid state memory device such as a nonvolatile solid state memory device (e.g. a usb "memory pen" or memory stick, or an SD card, etc.), carrying a computer program or programs for causing the method of the invention to be carried out when executing the program(s) or for implementing the data integration system of the present invention when executed on suitable hardware.

**Brief Description of the Drawings**

In order that the present invention may be better understood, embodiments thereof will now be described, by way of example only, with reference to the accompanying drawings in which:

Figure 1 is a block diagram illustrating in overview a data integration system for interfacing between a user and a number of heterogeneous data resources according to an embodiment of the present invention;

Figure 2 is a block diagram illustrating the Integration Engine, of the data integration system of Figure 1, in greater detail;

Figure 3 is a flowchart illustrating in overview the steps carried out by the data integration system of Figure 1 in responding to a received user query;

Figure 4 is a schematic illustration of an example representation of database schema;

Figure 5 is a schematic illustration of an example representation of data records in a table in a relational database;

Figure 6 is a schematic illustration of an example representation of a part of an ontology showing only T-box elements of the ontology;

Figure 7 is a schematic illustration of a hierarchical mapping for use in the data integration system of Figure 1;

Figure 8 is a schematic illustration of a first mapping example showing a concept mapping between a concept of a global ontology and a single database data source;

Figure 9 is a schematic illustration of a second mapping example showing a concept mapping between a concept of a global ontology and two different database data sources;

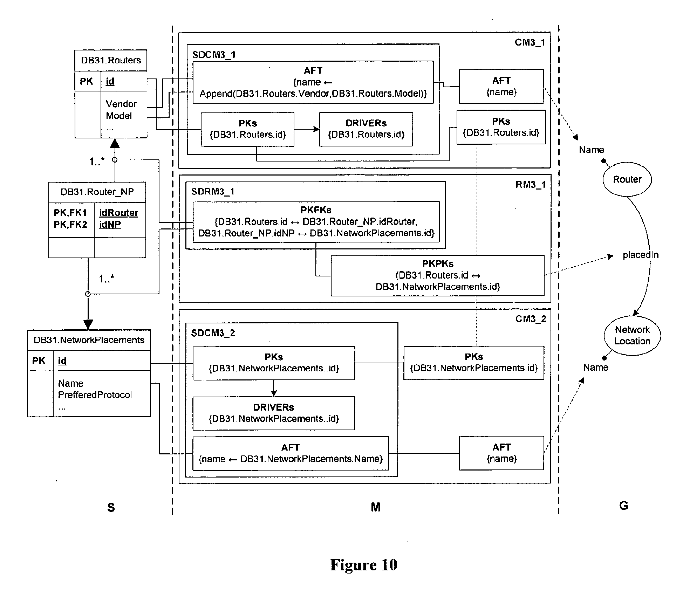

Figure 10 is a schematic illustration of a third mapping example showing a relation mapping between a relation of a global ontology and a single database data source;

Figure 11 is schematic illustration of a semantic fusion problem;

Figure 12 is a schematic illustration similar to Figure 11 but showing how the fusion problem can be solved;

Figure 13 is a schematic illustration of a fourth mapping example showing a mapping in which data from two different databases are merged;

Figure 14 is a schematic illustration of the development of a mapping;

Figure 15 is schematic illustration of a fifth mapping example in which a relation and two concepts in an ontology are mapped to various tables in two different database data sources;

Figure 16 is a schematic illustration of the fifth mapping example showing an example A-box result of a query stored as a set of temporary tables in a relational database;

Figure 17 is a schematic illustration of the fifth mapping example showing a sample of data stored in several different tables within two different relational database data sources;

Figure 18 is a schematic illustration of the fifth mapping example showing a sample of data stored in the tables of Figure 16;

Figure 19 also relates to the fifth mapping example and is similar to Figure 18 but shows the data remaining after performing merging using semantic identifiers; and

Figure 20 is a schematic illustration of a sixth mapping example according to a second data integration system embodiment in which virtual concepts are generated to enable relation mappings between concepts which are not contained in the same underlying data source.

**Detailed Description**

*System Overview*

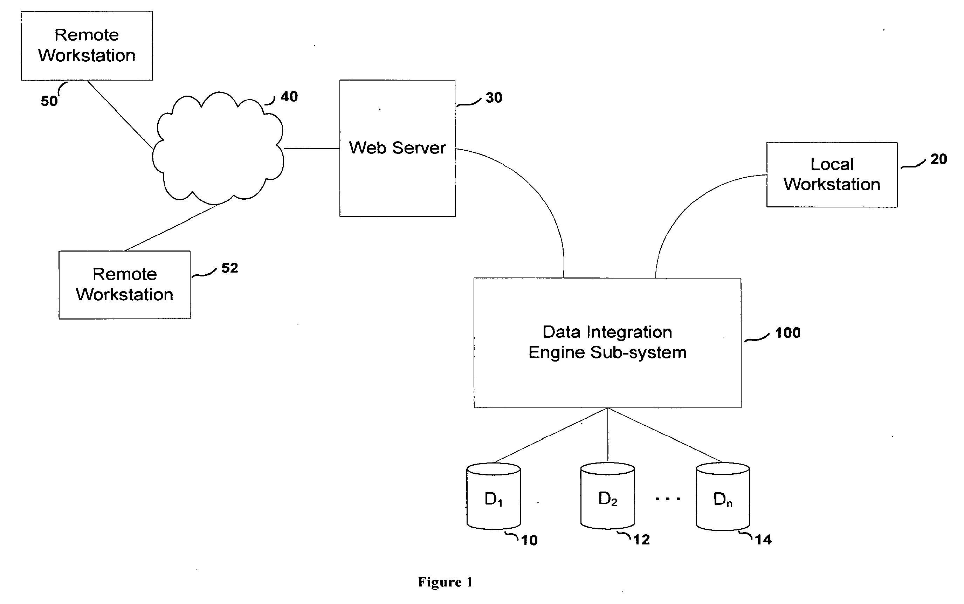

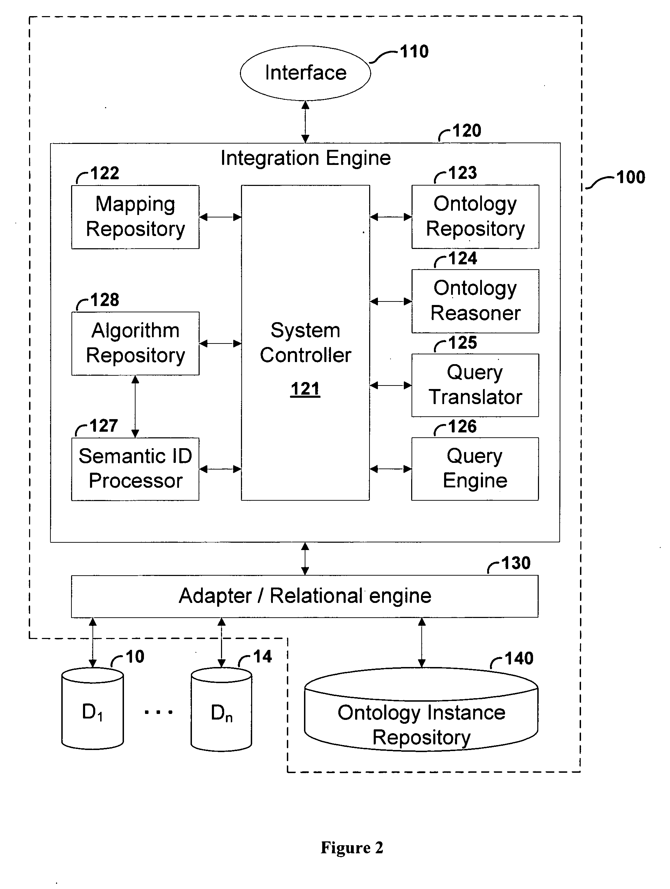

Figure 1 Illustrates in overview a data integration system according to an embodiment of the present invention. The data integration system comprises a plurality of heterogeneous underlying data sources 10, 12, 14 which in this case comprise a number of relational databases D1, D2, ..., DN, a data integration engine sub-system 100 (which is shown in greater detail in Figure 2), a local workstation 20 by which a local user can interact with the system, a web server 30 which is connected to a network 40 (e.g. a corporate intranet) by which remote users may interact with the system via remote workstations 50, 52 which are also connected to the network 40.

In overview, the data integration system of Figure 1 permits users to obtain a global view of the data contained in the underlying data sources and enables them to generate queries using a common terminology which are then processed by the data integration system, and the relevant data required to answer the queries are gathered from the underlying data sources and converted into the common terminology before presenting the responses to the queries to the user.

In the present embodiment, a common or global ontology is used to provide the common terminology and a modified ontology viewer can be used to present the ontology to a user, as well as to permit queries to be submitted by the user and to permit the results of the queries to be presented to the user.

Clearly, the data integration engine sub-system 100 performs a large number of tasks. The composition of the data integration engine sub-system is shown in greater detail in Figure 2 which also shows the data sources D1, D2, ..., DN (10, 12, 14).

As shown in Figure 2, the Data integration engine sub-system 100 comprises the following components:

- An interface 110 to permit interaction with the sub-system 100. It can provide a graphical user interface to a local device (e.g. to local workstation 20) or a system interface allowing other systems (e.g. web server 30) to communicate with the integration engine. It provides the means to submit a query to the system and to retrieve a corresponding result from it.
- An Integration Engine 120 which performs the majority of the processing performed by the data integration engine sub-system 100 and which comprises the following components:

  o A System Controller 121 which is the main component of the integration engine 120 and which executes all the steps of the integration process, using and coordinating all the other components present in the integration engine 120 and the sub-system 100 generally.
  o A Mapping Repository 122 which contains the mapping definitions. It stores the schema mapping and the semantic identifiers (discussed in detail below).
  o An Ontology Repository 123 which contains the ontology representing the global view over the data sources. It only stores the ontology T-box (i.e. it does not store instance data - T-box's and A-box's as used in Description Logics are discussed below).
  o An Ontology Reasoner 124 which performs ontology based reasoning over data contained in both the T-box and the A-box.
  o A Query Translator 125 which decomposes and translates the query submitted to the system into a set of queries over the data sources using the mapping stored in the mapping repository 122.
  o A Query Engine 126 which is responsible for ensuring that all of the queries provided by the Query Translator component are correctly sent to the underlying data sources 10-14 and for receiving back and controlling the storage of the results of those queries in the ontology instance repository 140 (discussed below) in a form which is compatible with the global ontology (also as discussed below).
  o A Semantic Identifier Processor 127 which performs the semantic fusion of the ontology instances stored in the Ontology Instance Repository 140.
  o An Algorithm Repository 128 which contains all of the functions and algorithms required to implement the comparison/categorisation functions and the merging functions used by the Semantic Identifiers.

- A relational database Adapter 130 provides the means by which the integration engine 120 can communicate with and use different relational database systems. The well known Java Database Connectivity API (JDBC) can be used to implement this part of the system. JDBC provides methods for querying (including updating) data in databases - JDBC is oriented towards relational databases.
- Finally, the integration engine 100 also includes an Ontology Instance Repository 140. In the present embodiment, this is a temporary relational database which is used to store the virtual A-Box - i.e. all the ontology instances (both rough, duplicated instances and refined instances) required to obtain a suitable response to an input query.

In the present embodiment, the mapping system used to perform translations between the global ontology and the schema used by the underlying heterogeneous data sources comprises the mapping stored in the mapping repository and the processor unit(s) contained within the Integration Engine 120 which manipulate this mapping in the ways described in greater detail below.

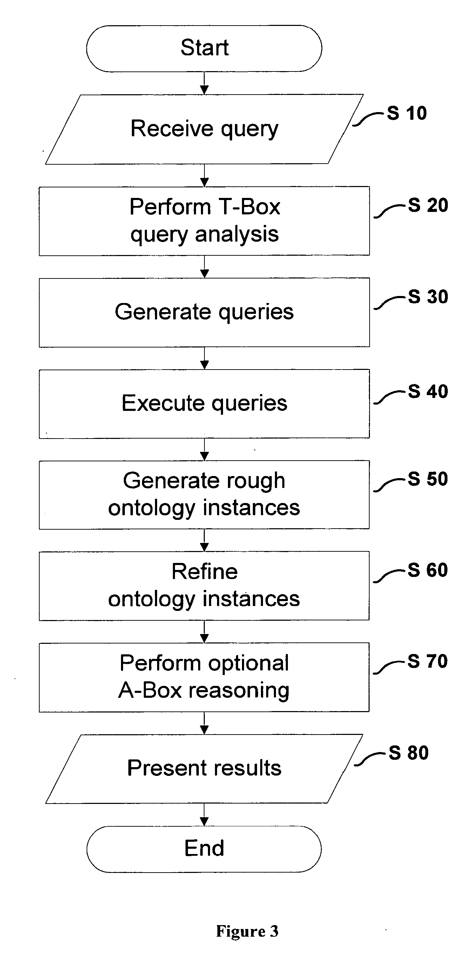

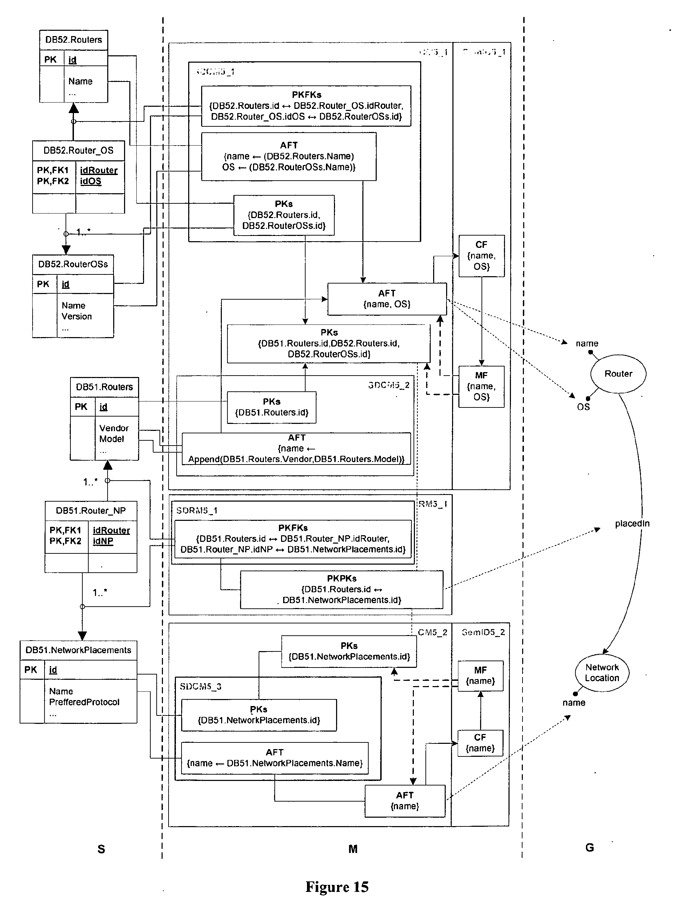

Referring now to Figure 3, the steps carried out by the data integration system of Figures 1 and 2 in order to respond to a user entered query are now described in overview. This figure will be referred to again further on in the description when discussing the details of an embodiment of the present invention and examples of particular queries and their execution, in particular with reference to a fifth and final mapping example as illustrated in Figures 15-19.

Initially, the system awaits for receipt of a query from a user at step S10. This query can and should be composed using the terminology of the global ontology. Having received such a query, the process proceeds to step S20 in which T-box query analysis is performed to identify all of the elements which need to be "looked up" from the underlying data sources in order to resolve the query; this step is discussed in greater detail below when considering an actual example query. This step may involve some reasoning being performed using the ontology. For example if the query referred to a parent concept (e.g. *Network Device*) it might be necessary to generate sub-queries for all of the child concepts to that parent concept (e.g. *Router* and *Server*).

Having identified the required elements to be looked up, the process proceeds to step S30 in which low-level queries are generated based on the identified required elements. Each of these low level queries is specific to a particular underlying database and is expressed in the format and terminology required by that database. The details of this step will be expanded upon below when considering an example. The process then proceeds to step S40 in which the low level queries are executed. This involves sending the queries to their respective underlying data sources, waiting for the underlying data sources to execute the queries and then receiving the results of those queries back at the integration engine 120.

Having received back the results of the low-level queries, the process proceeds to step S50 in which rough ontology instances are created from the received results and this is then stored in the ontology instance repository 140. This creation could involve some transformation of the data contained in the received results in order that they are consistent with the global ontology. It also requires generating suitable tables within the ontology instance repository 140 in which to store the relevant data. The set of tables created and filled in this way are referred to herein as a virtual A-box. After completion of step S50, the virtual A-box comprises rough instances; these may well have duplicate instances resulting from lookups from different data sources having overlapping (or identical) data instances. This is all discussed in greater detail below with reference to examples.

Having created the virtual A-box based on the results of the low-level queries, the process proceeds to step S60 in which the rough instances are categorised to identify any duplicate instances and then any such identified duplicate instances are merged to provide refined instances in which duplicates have been merged into a single refined instance. The refined instances replace the rough instances within the ontology instance repository and then the process proceeds to the next step.

At step S70 the integration engine can (optionally) perform automated reasoning on the content of the virtual A-box, as well as simply determining what data should be selected from the A-box in order to present to the user as the final result of the original input (high level) search query. This selected data is then stored in its own table in the ontology instance repository 140 in step S80 and presented to the user, either as a relational table (or portion thereof) viewed using a suitable relational database viewer or it is converted into an alternative format (e.g. into an ontology language such as RDF or OWL and then viewed using a suitable viewer for that format.

***Discussion of theoretical underpinnings***

Having given a brief overview of the data integration system above, there now follows a brief discussion of some theoretical aspects of data integration and then a detailed discussion of some simple examples of using the data integration system on an example data set, etc.

A Data Integration System (DIS) can be formalized as a triple <G,S,M > where:

- G is the conceptual schema, an abstract representation of the data sources to integrate; this set represents the data access layer, the interface between the data integration system and the world. In our case it is an ontology O.
- S is the data source. This set represents the data repository layer, the source of information that has to be accessible through G: a set of heterogeneous relational databases (D1..Dn).
- M is the mapping. This set contains the correspondences between elements of G and elements of S. The mapping also models information on how to combine the various elements.

A relational database D is a collection of data items organized as a set of formally-described tables from which data can be accessed or reassembled in many different ways. Each table T (which is formally called a relation1) contains one or more data categories in columns (F). Each row contains a unique instance of data (record) for the categories defined by the columns. To identify a record in a table t, a primary key PK is used. To establish DB relation among tables, referential integrity constraint (primary-foreign key constraint) PKFK between the primary key of a table (t1) and the foreign key of the related tables (t2) is used. A database schema D can be formalized as: D=<T,PKs, PKFKs> which are the sets of the tables, primary keys and referential integrity constraints.

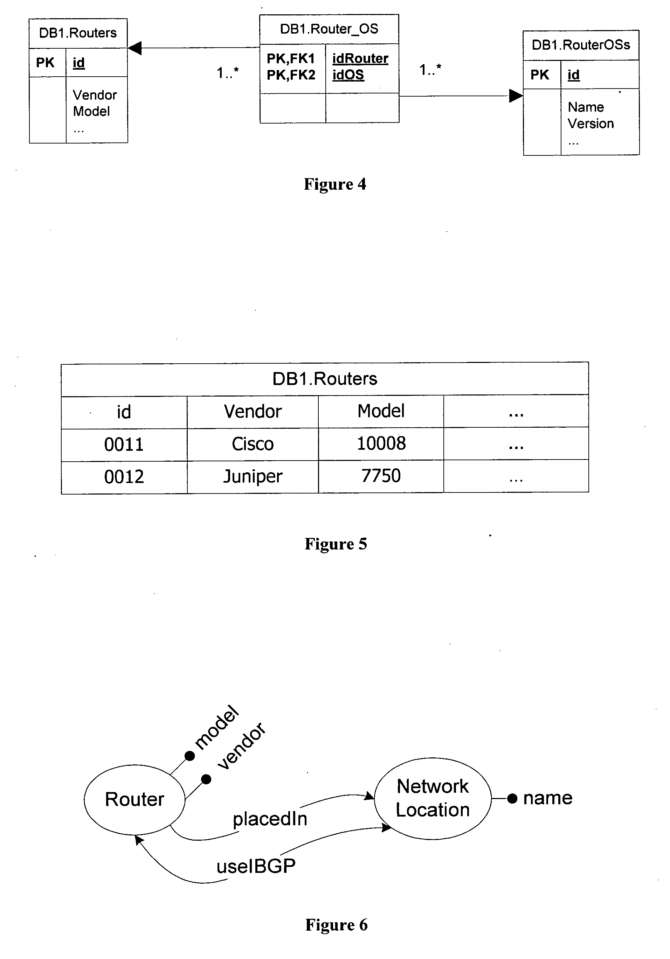

Figure 4 shows a schematic representation of a relational database schema. Three tables (from the same database "DB1") are shown, "Routers", "Router_OS" and "RouterOSs". Every table contains columns. The columns marked as "PK" are the primary key of the tables. Between the tables there are two DB relations (note that since ontologies also contain the idea of relations (as elements), the term "DB relation" is used in the present specification to refer to relational database relations and the term "relation" is used to refer to the ontology elements known as relations). The representation as illustrated in Figure 4 is used in the present specification throughout to illustrate database schema.

Figure 5 shows one of the tables (DB1.Routers), whose schema is illustrated in Figure 4, drawn to show some example data records contained within the actual table (as distinct from the schema representation of the table). The ordering of the columns is largely irrelevant but by convention the primary key column (indicated as PK in Figure 4), which in this case is the id column, is placed on the left hand side of the table.

Since ontologies also contain the concept of relation, we use the term "DB relation" to refer to the ones in data bases and the term "relation" to refer to the ontology relation.

Traditionally an ontology can be viewed as a hierarchy of concepts, C, that are connected to each other by means of relations, R. Every concept can have one or more attributes, A, which contain values associated with the concept. A relation, R, is defined from one or more domain concepts to one or more range concepts.

Theoretical discussions about ontologies generally involve terminology drawn from Description Logic. In DLs a distinction is generally drawn between the so-called T-Box (terminological box) and the A-Box (assertional box). In general, the T-Box contains sentences describing concept hierarchies (i.e., relations between concepts) while the ABox contains ground sentences stating where in the hierarchy individuals belong (i.e., relations between individuals and concepts). For example, the statement:

(1) "A router may be related to a Network Location by a placedIn relation" belongs in the T-Box, while the statement:
(2) "The router with MAC address 89:59:7A:89:F2:44 is a Cisco 10008" belongs in the A-Box.

The ontology T-Box is a controlled vocabulary, a set of classes and properties, where all the ontology definitions reside. The ontology A-Box contains the underlying data associated with the T-Box, the instances of the ontology. The T-Box of an ontology O can be formalized as: O=<C,R> that is the set of concepts and the relations between them. Generally, O is provided by a domain expert or an external application that defines the T-Box.

Figure 6 illustrates an example of (part of) an ontology T-Box. Two concepts "Router" and "Network Location" are related by the relation "placedIn" and "useIBGP". The concept "Router" has two attributes "model" and "vendor", while "Network Location" has just an attribute called "name". It must be recalled that a concept attribute could have cardinality greater than one e.g. it might be located in a network location known by different names or it might have connections to different parts of the network and it could therefore be associated with different Network locations associated with each different connection.

In the present embodiment, the A-Box is created when a query is executed by the Data Integration System (DIS) and therefore the resulting A-Box contains the data required by the query. The A-Box is built using data from different sources. Instead of building a real A-Box, using a common subject-predicate-object structure, in the present embodiment the A-Box data is expressed as a relational database and because of this it is sometimes referred to in the present specification as a "virtual A-Box". This approach has the advantage that the A-Box can be managed directly via Relational Database Management software tools (RDBMs) and so the DIS can leverage the performances and maturity of these tools. The mapping used in the present embodiment drives this process of virtual A-Box creation.

## MAPPING

The mapping is a key aspect of the present embodiment and is instrumental in the present embodiment having a number of its key benefits over prior known data integration systems.

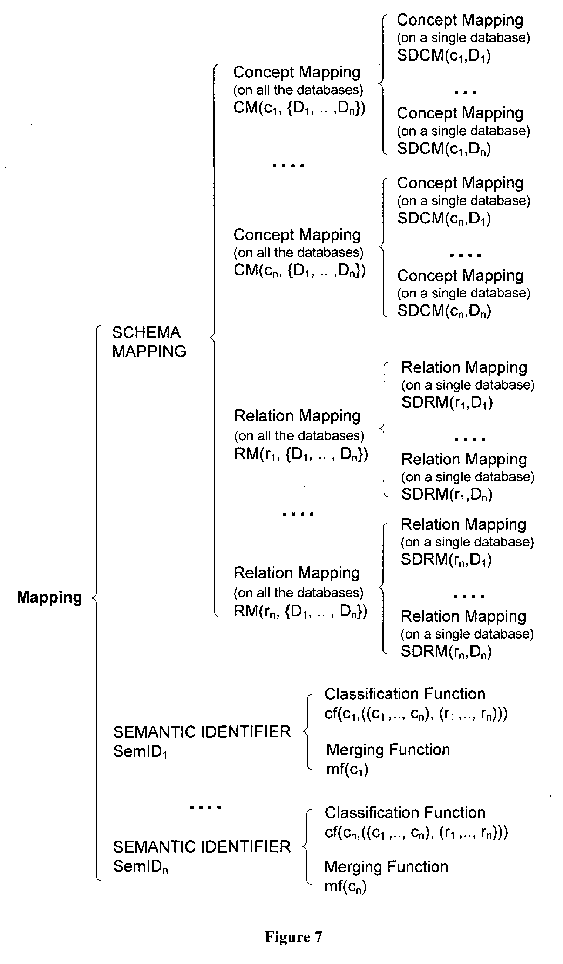

The mapping, M, in the present embodiment, which is schematically illustrated in Figure 7, comprises a number of elements arranged in a hierarchy. As shown in Figure 7, the Mapping comprises three tiers or levels. The highest tier or level 1 comprises a Schema Mapping (SM) and a plurality of Semantic Identifiers (SemIDs). The middle tier or level 2 comprises a plurality of Concept Mappings (CMs), a plurality of Relation Mappings (RMs), a plurality of Classification Functions (cf()s) and a plurality of Merging Functions (mf()s). The lowest tier or level 3 comprises a plurality of Single Data source Concept Mappings (SDCMs) and a plurality of Single Data source Relation Mappings (SDRMs).

As mentioned above, at the highest tier (level 1) of the hierarchy (excluding the Mapping itself) are a Schema Mapping element (SM) and a plurality of Semantic Identifiers (SemIDs). That is to say, using a mathematical notation:

$$M = <SM, \{SemIDs\} >$$

i.e. the Mapping, M, comprises a Schema Mapping, SM, and a number of Semantic Identifiers, SemIDs, where:

- The Schema Mapping, SM, is a set of sub-elements which together contain all the information which relates the metadata schema of the databases to the ontology T-Box (of the global ontology O); and
- The Semantic Identifiers, SemIDs, contain information to help the system to identify data related to the same entity (or instance) and to aggregate the related data correctly into proper refined ontology instances in an automated manner; note that the semantic identifiers are expressed in the ontology O (i.e. using the terminology of the global ontology O).

The mapping elements are organised in a hierarchical structure which helps with the efficient construction and management of the mapping; in particular, elements at the same level of the hierarchy (e.g. the Schema Mapping and the Semantic Identifiers, or all of the different Single Data source Concept (and Relation) Mappings) can be built and modified independently of one another and thus can be developed either concurrently or widely separated in time, etc.

The different components/elements of the mapping are described in more detail below.

### SCHEMA MAPPING (SM)

The Schema Mapping (SM), in the present embodiment in which the data sources are relational databases, contains all the elements that express schematic correspondences between the DB schemas of the underlying data sources and the global ontology O's T-Box. They are the elements used to map ontology concepts and relations on the relational data sources. Using mathematical notation, the Schema Mapping (SM) can be expressed thus:

$$SM(O, D1..Dn) = <\{CMs\}, \{RMs\}>$$

i.e. the Schema Mapping is a function of the global ontology, O, and the database schemas, D1...Dn, of the underlying data sources DB1...DBn and it comprises a set of Concept Mappings (CMs) and a set of Relation Mappings (RMs). The Concept Mappings are discussed in detail below first, and then the Relation Mappings further below.

### CONCEPT MAPPING (CM)

Each concept mapping, CM, element specifies how an instance of a concept is built using the data stored in the underlying data sources - i.e. it maps ontology concepts to the database schemas of the underlying data sources. Using mathematical notation, the constitution of a Concept Mapping can be given by:

$$CM(C, \{D1..Dn\}) = <\{PKs \text{ in } SDCMs\}, \{ AFT \text{ in } SDCMs\}, \{SDCMs\}>$$

The above basically states that each Concept Mapping, CM, is a function of a single Concept, C, and a plurality of Database Schemas D1...Dn and that it constitutes three sets of elements. The CM element thus represents the mapping of a single concept C over different databases DB1,..,DBn. It contains: a set of Single Data-source Concept Mappings (SDCMs) (described below), a set of Primary Keys, PKs, from the SDCMs and a set of Attribute-Field Transformations, AFTs, also from the SDCMs. The set of PKs contains all the primary keys from all the tables present in the CM element and it is used to build the instance of ontology relations between concepts. The set of AFTs lists all of the attributes of the concept being mapped to and refers back to AFTs contained in the underlying SDCMs.

Thus, the PKs and AFTs of a CM element are built using the information contained in the underlying SDCMs (Single Data source Concept Mappings) associated with the same concept as the respective CM element. In effect, the set of PKs is a collection of the PKs of the underlying SDCM's and the set of AFTs is a set of references to the AFT's of the underlying SDCMs. Each SDCM is an element of the mapping which specifies how a single concept of the ontology is mapped on a single data source.

## SINGLE DA TA-SOURCE CONCEPT MAPPING (SDCM)

Each Single Data-source Concept mapping (SDCM) element specifies how an instance of a respective concept is built from just a single underlying data-source. Typically, a Concept mapping (CM) element will comprise a plurality of SDCMs. For example, if two separate data-sources, DB1 and DB2, each store details of router devices, the CM element for a Router concept in the Ontology may comprise SDCMs each respectively associated with the two separate data-sources, DB1 and DB2. Each SDCM depends upon (i.e. is a function of) a single concept, C, and a single Data-source, D, and comprises a set of one or more Primary Keys, {PKs}, a set of zero one or more Attribute Field Transformations, {AFTs}, optionally a set of Primary Key and Foreign Key associations, {PKFKs}, and optionally a set of optional FiLters, {oFILs}. This can be expressed mathematically thus:

$$SDCM(C, D) = <\{PKs\}, \{PKFKs\}, \{AFT\}, \{oFILs\}>$$

In detail, each SDCM element between a concept C and a database D contains:

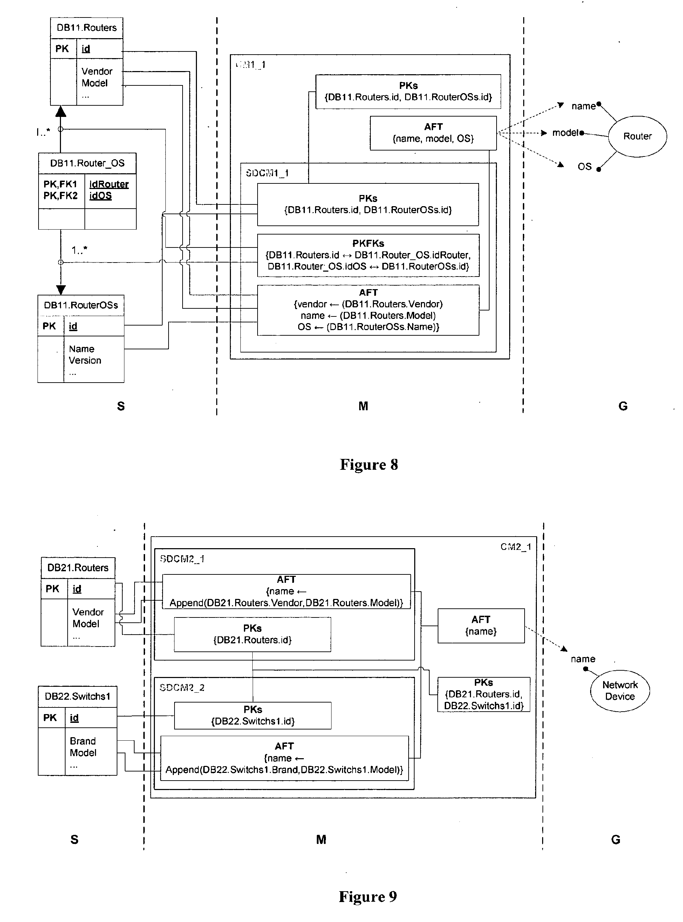

- *PKs*: this is the set of primary keys of the tables involved in the mapping (note that a particular data-source may include tables which are not relevant to the concept being mapped to - in this case the primary keys of these tables should not be included in this set);
- *PKFKs*: it contains all the primary-foreign key connections between the tables involved in the mapping. This set must be a tree-like ordered set. The order in which the PKFK connections appear determines the construction of concept instances and therefore affects the semantics of the data extracted. In particular, the first primary key appearing in this set determines the instances of the concept being mapped to - i.e. each record having a distinct vale of this primary key (and therefore each distinct record in practice since generally speaking the primary key should be different for each record in any given table). For example, in Figure 8 (which shows a first Example mapping) the PKFKs of SDCM1_1 commences with DB11.Routers.id this indicates that the number of instances of the concept Router (shown on the right hand side of Figure 8) derived from data source DB11 will equal the number of distinct records in the table DB11.Routers of which column DB11.Routers.id is the primary key. This set is required only when a plurality of tables are involved in the mapping. e.g. in Figure 8 tables DB11.Routers, DB11.Router_OS and DB11.RouterOSs are all needed in order to obtain all of the attributes of the concept Router (in the case of Figure 8 being name, model and OS) - note that DB11.Router_OS is a linking table and is used in DB11 because the cardinality of DB11.RouterOSs may be different from that of DB11.Routers - i.e. each router device as stored in DB11.Routers may, for example, have more than one type of OS associated with it and listed within DB11.Router-OSs (of course, joining tables can be used to join different attributes even where there is no difference in cardinality, but they are most beneficilly used when there is sucha difference of cardinality. Also note that the PKFKs are tree like because there could be several leaf tables connected via several joining tables in order to capture all of the attributes of the concept in question and all such paths to such leaf tables should be captured in the PKFKs, each such path starting with the primary key of the main (concept-instance-determining) table (i.e. table DB11.Routers in the case of DB11 as it relates to the concept "Router").
- *AFT*: this is the set of transformations between ontology attributes and database columns. In data integration, mapping between schemas and ontologies can lead to syntactical and semantic heterogeneity: integrating information implies the translation of format and meaning between entities. In mathematical terms we can say that given two sets of elements, H and K, we may define a transformation (tf) as a generic function converting instances of elements of H into K ones. In the present embodiment the transformations are meant to translate data extracted from zero, one or more database fields into ontology attribute instances. Formally:

$$Attribute \leftarrow tf(F1,.., Fn)$$

The function tf can assume different forms: it can, for example, be or include a string concatenation, substring, uppercase, a mathematical function, a statistical one, a currency conversion, a language translating function, an algorithm and so on. E.g. referring briefly to Figure 15 (which shows a fifth mapping example), given a table "Routers" from a database "DB51" with the columns "Vendor" and "Model", and concept Router with the attribute "name" from the ontology, it may be that a person creating the SDCM5_2 associated with data source DB51 and concept Router determines that an instance of a "Router.name" attribute of the concept Router is composed by a transformation function that appends the two columns "Vendor" and "Model". i.e. :

$$\text{Router.name} = \text{Append}(\{\text{DB51.Routers.Vendor, DB51.Routers.Model}\})$$

which is shown in Figure 15 in SDCM5_2 although "Router" is omitted since SDCMS_1 is known by the system to be associated with the concept Router and so this can be implied by the system.

- *oFIL*: this is an optional filter. Since not all the records from a table, or a set of tables, have to be mapped in a concept, there is the need to select the appropriate ones: that may be done using a filter specified in oFIL. A filter can be any function which defines the conditions the records have to meet (in order to be selected for extraction so as to be coverted into an attribute of an instance of a concept of the ontology).

Figure 8 shows a schematic representation of a first mapping example and shows a concept mapping (CM1_1) built to map a set of tables from database "DB11" into the concept "Router". The CM "CM1_1" is built using only one SDCM (SDCM1_1) since only tables from one database are involved. The PKs and AFT sets in CM1_1 are essentially the same as SDCM1_1. SDCM1_1 contains the PKs of the tables whose fields are involved in the mapping, the PKFKs and the AFT, the attribute-field transformations. It must be noticed that in PKFKs the primary-foreign keys connections (or relations using the terminology of relational databases) are ordered, from the "DB11.Routers" table to the "DB11.RouterOSs" table, via the "DB11 .Router_OS" joining table.

Figure 9 shows a second mapping example. This example illustrates a CM (CM2_1) built on top of two databases (i.e. involving a mapping between two databases and a concept). The CM is built to map "DB21.Routers" and "DB22.Switches1" to the concept "Network Device". CM2_1 is built using the information of SDCM2_1 and SDCM2_2. SDCM2_1 and SDCM2_2 are built straightforwardly. Since just one table per database is mapped, they don't contain any PKFKs.

Concept mappings (CM's) can be built in a systematic mnner based on the underlying SDCM's; therefore, in the present embodiment CM's are built automatically. This is discussed in greater detail below.

### *RELATION MAPPING (RM)*

The relation mapping RM element represents the mapping of an ontology relation to one or more columns in one or more data sources. As mentioned above, a relation in an ontology is a relation between between a domain concept and a range concept. For example the relation placedIn might have a domain concept of Router and a target concept of networkLocation; in such a case the relation placeIn would tie a particular instance of a Router to a particular instance of networkLocation (e.g. Router XYZ might be placed in or located in a network position Internal Edge position jk). This element of the mapping is crucial to relate correctly instances of the concepts considered by the relation. RM is built using PKFKs and relating the PKs contained in the domain and range concepts. Mathematically, the Relation Mapping (RM) element may be expressed thus:

$$\text{RM}(R, \{D1,..,Dn\}) = <\{\text{PKPK} = (\text{PK\_D, PK\_R}) \text{ in SDRM's PKFKs}\}>$$

where :

$$\text{SDRM } (R, D) = <\{\text{PKFKs}\}, \{\text{oFILs}\}>$$

The above formulae state that the Relation Mapping (RM) is a function of a Relation R within the global ontology and (at least some of) the data base Schema of the underlying data sources, and that it comprises a PKPK element which itself comprises the Primary Key associated with the Domain concept of the associated ontology relation, R, (the PK_D) and the Primary Key of the Range concept of the associated ontology relation, R, (the PK_R) which are determined from the underlying one or more Single Domain Relation Mappings (SDRM's), in particular, from the PKFKs element thereof. It also expresses the idea that each SDRM is a function of a the associated ontology relation, R, and a the schema (or equivalent) of a single data source D, and that each SDRM comprises a set of one or more PKFKs (which are similar to the PKFKs of the SDCM's described above) and a set of zero, one or more oFILS (which correspond to the oFILS of the SDCM's).

### SINGLE DA TA-SOURCE RELATION MAPPING (SDRM)

As for CM, RM is the union of a set of Single Data source Relation Mappings (SDRMs) each of which maps an ontology relation to a single DB. PKPK is a set of pairs of primary keys each of which is extracted from the PKFKs of a corresponding SDRM. Each PKPK pair identifies the concept instances which are related by the relation, R.

As noted above, each SDRM thus contains:

- *PKFKs*: this element contains the connections (or the RDB relations) between the tables involved in the concept mappings. The PKFKs considered comprise, in the present embodiment, a list where the first element of the list is a PK of the domain concept and the last one is a PK of the range concept.
- *oFILs*: a set of zero, one or more optional filters as in SDCMs.

Figure 7 illustrates a third mapping example showing a simple situation involving a relation mapping (RM). The ontology being mapped to includes two distinct concepts: a concept "Router" and a concept "Network Location", furthermore, the ontology includes a relation "placedIn" which relates these two concepts. Two CMs have been correctly defined from the given data source DB31 and the two concepts of this third example. The data integration system of the present embodiment can use these CMs to create the instances of both the concepts, "Router" and "Network Location", stored in DB31 by retrieving the required data from the database as discussed above. Furthermore, the relation "placedIn" is built using the PKPK of RM3_1 as follows. The PKPK of RM3_1 establishes the relation between the instances of the two concepts, comprising as it does the Primary Key to Primary Key pair DB31.Routers.id ↔ DB31.NetworkPlacements.id. The PKPK of RM3_1 is derived from the PKFKs of the underlying SDRM which comprises the following pairs:

DB31.Routers.id ↔ DB31.Router_NP.idRouter; and
DB31.Router_NP.idNP ↔ DB31.NetworkPlacements.id

Note that the use of a joining table Router_NP enbales the cardinalities of the domain and range concepts to have different cardinalities (e.g. more than one router could be located at the same network location, or a router may be located at more than one (presumably, logical) network location.

### VIRTUAL A-BOX

The information in CMs, RMs and in the ontology are used to build a temporary relational representation (i.e. a temporary database) of the ontology A-Box specific to a particular query. Such a structure is used to store the relevant data from different databases and is manipulated to represent the ontology instances. Given a mapping different virtual A-boxes could be generated but they must include the schema mapping elements. A detailed description of the creation and population of a virtual A box in response to receipt of a particular query is given below with reference to the fifth mapping example given in this document which is illustrated in Figures 15-19.

### SEMANTIC IDENTIFIER (SemID)

The function of the semantic identifier (SemID) is to identify duplicate instances of a concept (usually derived from separate data sources) and to merge any duplicate instances so identified. This aggregation procedure is of extreme importance in a multi data source data integration system.

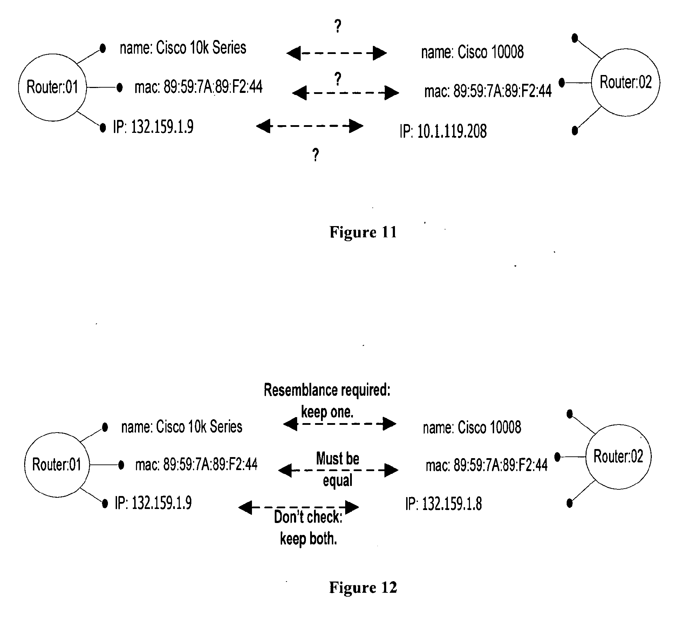

To introduce the problem solved by SemIDs, an example is shown in Figures 11 and 12. In each Figure, Two instances of the concept "Router" are shown. Looking at Figure 11 initially, from the information which is shown associated with the two instances (one on the left hand side of the Figure and the other on the right hand side of the Figure) it is plain to see that there are some similarities between the two instances, for example, both instances contain exactly the same mac address and they have very similar names.

However, the information contained in the ontology is not sufficient to permit a DIS to correctly build an integrated view in all cases, because no information about how to recognize and merge data representing the same entities is contained in the ontology itself.

The mapping described so far (i.e. the Schema Mapping and its constituent CMs and RMs etc.) provides enough information to collect the data from the databases and to create instances of the required concept. But these instances need further analysis: instances represented in a different form could be related to the same information. Especially given that the integration process collects data from different data source/databases; the PKFKs help locally (at single database level) to relate instances of attributes, while at global level (from all the sources) there is the need to rely on a different technique. Therefore it is necessary to find a way to discover related information, fuse and aggregate it correctly, according to the semantics of each concept. That is done in the present embodiment by the semantic identifiers, SemIDs, which can be expressed in mathematical notation thus:

$$SemID = <CF, MF>$$

Which is to say that each Semantic Identifier comprises a Classification Function, CF, and a Merging Function, MF.

Thus, a semantic identifier has two components:

- *Classification Function (CF)*: this function is used to classify a set H of rough instances of a concept (with which the Semantic identifier is associated), produced using SM, in to categories {K0, ... ,Kn} of equivalent elements (according to the function). The classification function may be borrowed from record linkage, entity resolution, and clustering or classification algorithms.

- *Merging Function (MF)*: once the classification function has returned the set of categorized instances {K1, ... ,Km}, a merging function is necessary to create a representative instance for each category. This procedure is defined by a merging function that, for each attribute defines the method used for merging the plural, rough. duplicate instances into a single final instance (Average, Max Information, Union, Intersection, etc.). Once all the categories have been merged then the final instances of the concepts can be used to repopulate the A-Box (in place of the original rough. duplicate instances).

The semantic identifier holds enough information to fuse the semantically related information. During this fusion process, even the PKs present in CMs have to be fused as is described below. This is a very important point since it allows keeping track of the origin of the integrated information and provides the means to build DB relations based on the semantics of a given concept. Indeed when one concept is built using different records from different tables and databases, the PKs of a CM contains all the primary keys of the sources and therefore the PKs can be used to establish connections between the data sources.

Figure 12 represents an example semantic identifier for the case presented in Figure 11. In this case it is decided by the person responsible for creating the semantic identifier (the SemID mapper) that if two separate, rough instances of the concept Router have identical values for the attribute mac then they can be categorised as being the same actual instance. In addition, the mapper specifies that the attribute name should be similar for such cases (such similarity can be assessed using typographical processing and/or some sort of lookup table - in the event that the similarity is identified as being below a predetermined threshold, an error should be flagged for investigation by user/operator of the system). These two tests make up the classification function part of the semID. In order to perform merging, the mapper specifies that just one value for the mac attribute can be kept (and, since these will be equal, it obviously doesn't matter which one is kept) that both values for the attribute IP should be kept (note that the cardinality for the attribute IP address can be greater than one per instance of the concept Router) and that for the name attribute just one value should be kept. Since these may be different, there may be expressed explicitly how to decide which value to keep. This could include a number of factors and could be as complex or as simple a decision as the mapper decides. For example it could include factirs such as the length of the name (e.g. it might be preferred by the mapper to keep the loonger name since this may provide more information, or the shorter one may be preferred as being more concise, a lookup table could specify known possible options and rank according to priority, it could depend upon the data source from which the instance was extracted (e.g. some data sources could be preferred over others), etc. It should be noted that both the classification and merging functions are generally expressed in terms of the global ontology (e.g. a comparison of attributes of a concept) and not in terms of values in records in the underlying databases (although the system can dig back to ask questions about these if necessary - e.g. to identify the underlying database from which a particular instance has been derived). It should also be noted that the SemIDs offer great flexibility since the classification and merging functions can take any form as desired by the mapper.

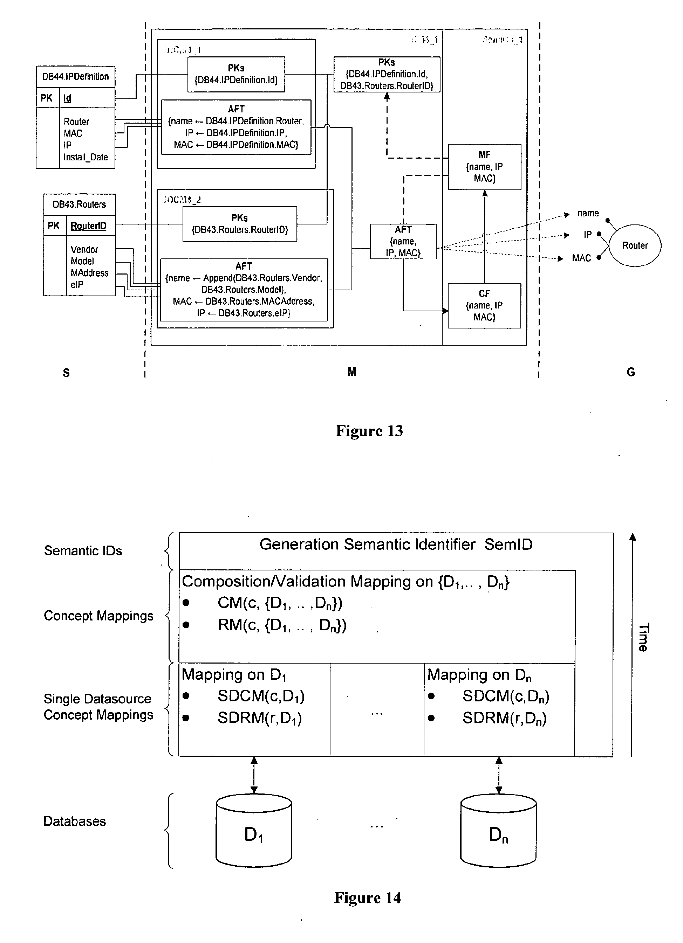

Figure 13 shows a fourth mapping example illustrating the use of a semantic identifier in order to identify duplicate rough concept instances and then to appropriately merge them based on the above discussion with reference to Figures 11 and 12. As will be described in greater detail below with reference to the fifth mapping example shown in Figures 15-19, when a query is received which asks for instances of the concept Router to be retrieved, the DIS of the present embodiment uses the CM4_1 mapping including the two underlying SDCMs, SDCM4_1 and SDCM4_2, to extract info from the underlying data bases DB44 and DB43 respectively and stores the resulting (rough) instances in a temporary relational database (the A-box). These rough instances are then compared (each instance with every other instance) using the classification function CF of the associated semID to identify duplicate instances. Any duplicate instances thus identified are then merged into single instances using the mergin function MF of the SemID and the resulting final instances are restored back in the A-box in place of the original duplicate rough instances. The effect of this is that any records contained in DB44.IPDefinition which have the same value in the MAC column as in the MAddress column of the ExtIPRouters table in DB43 will be identified as duplicate instances and merged into a single final instance.

This concludes the discussion of the Mapping, M, as illustrated in overview in Figure 7.

**MAPPING GENERATION**

There is now discussed the way in which a mapping, M, is generated. As mentioned above, the mapping, M, has a hierarchical structure, where every part depends only on its child components. This characteristic allows most of the mapping components to be built independently and at the same time (or at different times!). Furthermore since the mapping components are loosely coupled, the mapping is modular and can be changed easily (in addition to making the original creation process flexible and convenient).

Figure 14 illustrates in a schematic fashion an illustrative example of the development phases of the mapping. In the present example, the creation of the SDCMs and SDRMs, the mapping between the single data sources and the ontology concepts and relations, is carried out concurrently by different users (in the present embodiment skilled human users with a good understanding of both the ontology to which the databases are being mapped and of the underlying data base from which the mapping is being performed are employed to generate these low level mapping elements - however in principle automatic processes could be used to generate these mappings in more sophisticated alternative embodiments - perhaps employing various of the previously described automated mapping methods etc.). Once these elements have been created the related CM and RM elements are generated by the present embodiment automatically. In the present embodiment, the CMs and RMs are built according to the following methodology:

1. Group together the SDCMs mapping the same concept;
2. For each group of SDCMs do:

   a. Create a CM for that concept;
   b. Create a PKs containing all the PKs of the SDCMs;
   c. Create AFTs containing all the AFTs of the SDCMs;

3. Group together the SDRMs mapping the same relation;
4. For each group of SDRMs do:

   a. Create an RM for that relation;
   b. Create a PKPK using the first and last PK of the PKFKs of the SDRMs;

Optionally, a human user may check and validate the overall quality of the mapping generated by the system.

The Semantic identifier is defined as part of the mapping on the ontology concepts and/or relations and therefore does not generally require any information from the data sources. It may be defined concurrently with the creation of other parts of the Schema Mapping (and in the present embodiment they may be created by skilled human users who have a good understanding of the global ontology - a good understanding of individual underlying databases not normally being required). However, the SemIDs could be generated using information collected by querying the data sources using the SM: analyzing the data sources with record linkage algorithms, data quality or data mining tools could help to gather precious information to define higher quality SemIDs. Database administrators and domain experts can also be used to bring useful contributions to the definition of the SemIDs.

**EXAMPLE 5**

Having thus described in overview the structure and operation of the data integration system according to a preferred embodiment of the present invention with reference to Figures 1-3 and having described in detail the Schema Mapping, SM, including its development, employed by the present embodiment, there is now described an example query and its resolution with respect to an example set of underlying databases, an example global ontology and an example schema mapping. This fifth mapping example is illustrated in Figures 15-19.

As discussed above, the mapping M holds all of the information necessary to build an ontology A-Box, stored in relational form as a database, in response to an appropriate query. Referring now to Figure 3 again as well as to Figures 15-19, the main purpose of the DIS of the present embodiment is query execution, in order to retrieve semantically fused information, and optionally to additionally perform reasoning to derive implicit knowledge (i.e. knowledge which is contained implicitly within the databases, even if it is not expressly stored, e.g. as direct information contained within a single table or collection of tables explicitly linked together using foreign key relations).

As a first step in the process, a user inputs a query composed using the terminology of the ontology. Such query could be expressed in the well known SPARQL language or in another query language (step S10 of Figure 3). The following example query is expressed in SPARQL and is intended to get the data integration system to retrieve details of routers known to the system and their network locations (i.e. the type of the router: edge router, reflector, etc.).

```
PREFIX rdf: <http://www.w3.org/1999/02/22-rdf-syntax-ns#>
SELECT ?r ?p ?np
WHERE {
   ?r    rdf:type    Router
   ?p    rdf:type    placedIn
   ?np   rdf:type    NetworkLocation
   ?r ?p ?np
} ORDER BY ?r
```

The query refers to the ontology shown on the right hand side of Figure 15, i.e. comprising two concepts "Router" and "Network Location"; the Router concept has two attributes "name" and "OS" and the NetworkLocation concept has one attribute "name"; finally the concept Router (the domain concept) is related to the concept Network Location (the target concept) by the relation "placedIn".

In the second step of the process (see step S20 of Figure 3) all the concepts and relations needed by the query are identified. With regards to the sample query, the concepts "Router" and "Network Location", and the relation "placedIn" are required. An optional T-Box reasoning step could be executed here - for example to ascertain if any of the identified concepts have any children concepts whose instances should also be obtained, etc.

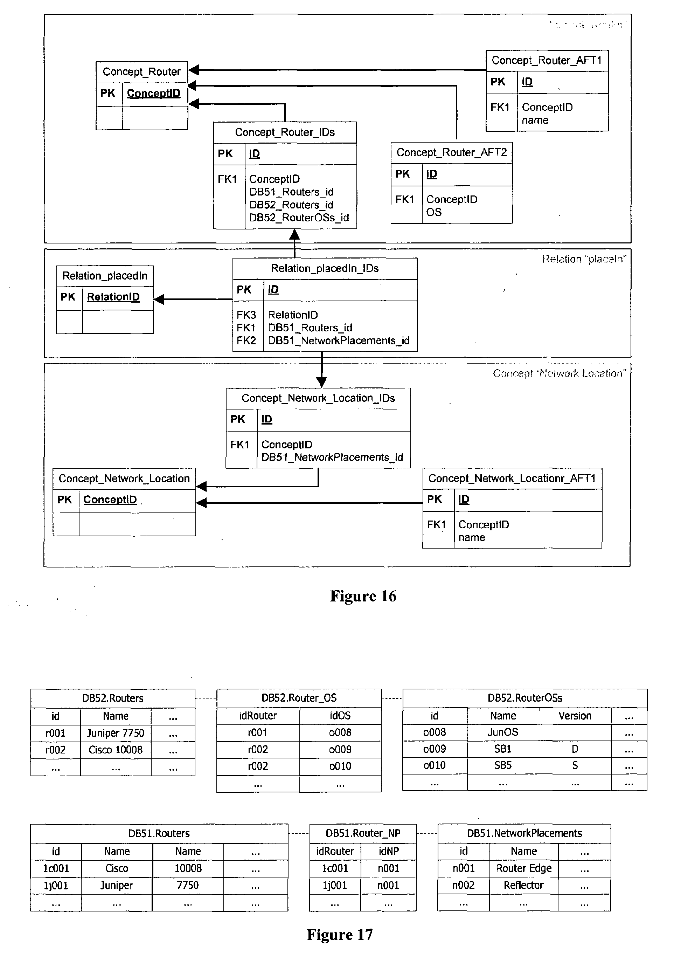

In the third step of the process (Query Generation - see step S30 of Figure 3) two activities are performed by the data integration system. Firstly, a relational structure (i.e. a set of temporary RDB tables) to hold the instances of the ontology (virtual A-Box) are created in an automated process driven by the Mapping, M. An example of an automatically built virtual A-box is shown in Figure 16: the structure of the virtual A-Box reflects the mapping elements from the Mapping M being used (see Figure 15). Thus, the CM primary keys are stored in the tables named "*_PKs"; and for each CM AFT, a table named "*_AFT(n)" is built. For example, CM5_1 of Figure 15 results in corresponding tables being set up as shown in the top portion of Figure 16 (labelled Concept "Router"), the corresponding four tables being: a one-column table called Concept_Router; a five column table called Concept_Router_IDs; a three column table called Concept_Router_AFT1 and a similar three column table called Concept_Router_AFT2. The purpose of the one column table is simply to hold an identifier for each instance of the concept "Router" with which these tables are associated. Each of the other tables associated with this concept includes, in addition to their own primary key column which is specific to just that table in question, a foreign key column which refers to the one column table which is thereby used to link or join all of the tables associated with a single concept (or relation) together such that, for the concept Router, each record in the tables can be related to a particular instance of the concept Router. The five column Concept_Router_IDs table is constructed by creating a further column (in addition to its own primary key column and the foreign key column referring to the one column table) for each primary key stored in the PKs set of CM5_1 - i.e. one column for the primary key DB51.Routers.id, one for DB52.Routers.id and one for DB52.RouterOSs.id. The AFT tables are created by adding respectively an additional column for the respective attribute - i.e. Concept_Router_AFT1 has an additional column created called name which is designed to store the values for the attribute name of the concept Router in respect of each instance of the concept router extracted from the underlying data-bases. Similarly, Concept_Router_AFT2 has one additional column called OS corresponding to the attribute OS of the concept Router.

In the second activity performed in this third step (S30 of Figure 3) the DIS generates, using the Schema Mapping and the list of concepts and relations identified in the preceding step, a set of queries which can be used to obtain the data required to populate the newly made A-box tables. The queries generation process is driven by the SDCM and SDRM elements present in the schema mapping. Below is shown the algorithm used in the present embodiment to generate the queries whose execution generates the data required to populate the A-box tables.

```
Given a concept mapping CM for a concept C do:

01 for each SDCM element in CM generate a query string as:
02   add 'SELECT' clause
03   add all the elements present in PKs
04   for each element in AFT in SDCM do:



05     translate transformation in the correspondent SQL fragment2
06     add the fragment with the transformation name
07   add 'FROM' clause
08   if PKFKs present (multiple tables involved) then:
09     for each element in PKFKs do:
10       extract table names T1 & T2 and related join fields F1 & F2
11       if T1 and T2 are not present in FROM clause then:
12         add T1
13         add 'JOIN' clause
14         add T2
15         add 'ON' clause
16         add F1 '=' F2
17       else if T1 already present then:
18         add 'JOIN' clause
19         add T2
20         add 'ON' clause
21         add F1 '=' F2
22       else if T2 already present then:
23         add 'JOIN' clause
24         add T1
25         add 'ON' clause
26         add F1 '=' F2
27   else (only one table involved)
28     extract table name T from PKs
29     add T
30   if oFils present then:
31     add 'WHERE' clause
32     translate filters in the correspondent SQL CLAUSE and add them3
33   return query string generated
```

This step translates the transformation expressed in the mapping in a proper SQL function. The details on how implement this translation depend on the SQL language used. In the present case an expression of the form "name ← (DB52.Routers.Name) is converted to "DB52.Routers.Name name" which indicates in SQL that data should be extracted from the column Name of table DB52.Routers and placed into an output column entitled "name". If a more complex expression is involved, this needs to be translated into the corresponding SQL expression, but this is straightforward and well known techniques exist for achieving this; in one embodiment the AFT's of the mapping could simply be written in the correct SQL format (where all of the underlying data sources use the same SQL language) to avoid any problems of translation.

As for the step at line 05, the translation of the filters oFILs depends on the language used in the mapping to express the filters themselves and the target SQL language used by the underlying data source. In an embodiment, the oFILs could be written in the SQL target language in the first place, where all of the underlying data sources use the same SQL language.

The output of the previous algorithm, applied to the mapping show in Figure 15 when the concept "Router" is required, is shown below.

```
    Algorithm execution for CM_1:


-    When SDCM_1 used:
02    SELECT
03    SELECT DB52.Routers.id, DB52.RouterOSs.id
04-06 SELECT DB52.Routers.id, DB52.RouterOSs.id,
    DB52.Routers.Name Name, DB52.RouterOSs.Name OS
07  SELECT DB52.Routers.id, DB52.RouterOSs.idRouter,
        DB52.Routers.Name Name, DB52.RouterOSs.Name OS FROM
08-26 SELECT DB52.Routers.id, DB52.RouterOSs.idRouter,
    DB52.Routers.Name Name, DB52.RouterOSs.Name OS FROM
    DB52.Routers JOIN DB52.Router_OS ON DB52.Routers.idRouter =
    DB52.Router_OS.id JOIN DB52.RouterOSs ON DB52.Router_OS.idOS
=   DB52.RouterOSs.id
33   return query


-    When SDCM_2 used:
02    SELECT
03    SELECT DB51.Routers.id
04-06 SELECT DB51.Routers.id, DB51.Routers.Vendor ||
    DB51.Routers.Model Name4
07    SELECT DB51.Routers.id, DB51.Routers.Vendor ||
    DB51.Routers.Model Name FROM
27-29 SELECT DB51.Routers.id, DB51.Routers.Vendor ||
    DB51.Routers.Model Name FROM DB51.Routers
33    return query
```

**The queries produced are the following ones:**

```
Query 5.1
SELECT DB52.Routers.id, DB52.RouterOSs.idRouter,
    DB52.Routers.Name name, DB52.RouterOSs.Name OS
FROM DB52.Routers
 JOIN DB52.Router_OS ON DB52.Routers.idRouter =
 · DB52.Router_OS.id
 JOIN DB52.RouterOSs ON DB52.Router_OS.idOS = DB52.RouterOSs.id


Query 5.2
SELECT DB51.Routers.id, DB51.Routers.Vendor ||
    DB51.Routers.Model name
FROM DB51.Routers
```

The operator "II" is used in SQL92 to express the concatenation between strings. Other SQL dialects could use different operators.

Note that expressions such as "SELECT DB52.Routers.Name Name" means select data from the column DB52.Routers.Name and put it in a column for the output data table called name. If no output column name is expressly given, the output column will be given the same name as the source column name from which the data is extracted - i.e. the expression SELECT DB51.Routers.id will place the output data in a column called DB51.Routers.id.

A similar algorithm is used to generate the queries to build the rough instances of the ontology relations:

Given a relation mapping RM for a relation R do:

```
01 for each SDRM element in RM generate a query string as:
02    add 'SELECT' clause
03    add the first field present in the first element of PKFKs
04    add the second field present in the last element of PKFKs
05    add 'FROM'
06    for each element in PKFKs do:
07       extract table names T1 and T2 and related join field F1
   and F2
08       if T1 and T2 are not present in FROM clause then:
09          add T1
10          add 'JOIN' clause
11          add T2
12          add 'ON' clause
13          add F1 '=' F2
14       else if T1 already present then:
15          add 'JOIN' clause
16          add T2
17          add 'ON' clause
19          add F1 '=' F2
20       else if T2 already present then:
21          add 'JOIN' clause
22          add T1
23          add 'ON' clause
24          add F1 '=' F2
25    if oFILs present then:
26       add 'WHERE' clause
27       translate filters in the correspondent SQL CLAUSE and
      add them
28    return query string generated
```

Following is shown the output of the algorithm, when applied to the mapping Figure 15, for the relation "placedIn":

```
Algorithm execution for RM_1:


-   When SDRM_1 used:
02      SELECT
03      SELECT DB51.Routers.id
04      SELECT DB51.Routers.id, DB51.NetworkPlacements.id
05      SELECT DB51.Routers.id, DB51.NetworkPlacements.id FROM
06-24 SELECT DB51.Routers.id, DB51.NetworkPlacements.id FROM
      DB51.Routers JOIN DB51.Router_NP ON DB51.Routers.idRouter =
      DB51.Router_NP.idNP JOIN DB51.NetworkPlacements ON
      DB51.Router_NP.idNP = DB51.NetworkPlacements.id
28      return query
```

The query generated:

```
Query 5.3
SELECT DB1.Routers.id, DB1.NetworkPlacements.id
FROM DB1.Routers
    JOIN DB1.Router_NP ON DB1.Routers.idRouter =
      DB1.Router_NP.idNP
    JOIN DB1.NetworkPlacements ON DB1.Router_NP.idNP =
      DB1.NetworkPlacements.id
```

The queries can be generated in a standard SQL language5 or in the proper SQL dialect languages (PL/SQL for Oracle databases, T-SQL for Microsoft SQL Server and so on). In enhanced embodiments, optimizations could be achieved at this stage, e.g. building the query according to the best query execution plan for each database.

In the fourth step of the process (Step S40 of Figure 3 - Query Execution) the queries are executed. Continuing on with the present example therefore, Query 5.1 retrieves from DB52 a table of data along the following lines:

| DB52.Routers.id | DB52.RouterOSs.id | name | os |
|---|---|---|---|
| r001 | o008 | Juniper 7750 | JunOS |
| r002 | o009 | Cisco 10008 | SB1 |
| r002 | o010 | Cisco 10008 | SB5 |

The SQL standard has gone through a number of revisions: SQL-92, SQL:1999, SQL:2003, SQL:2006 and SQL:2008.

In the fifth step of the process (step S50 of Figure 3 - Generate Rough Ontology Instances) the data provided in the output results tables are then entered into the appropriate tables in the virtual A-box. The basic procedure followed to extract the data from the results output by the underlying data sources (data-bases) and to insert these into the virtual A-box tables is as follows:

For each Concept Do:

For each SDCM Do:

Identify the Primary Key (PK) which drives instance generation6;
add an entry to the one column Concept table (e.g. Concept_Router) for each unique value of the identified PK;
(continue to) populate the IDs table (e.g. Concept_Router_IDs) using the data from the results output table7;
(continue to) populate the AFT tables (e.g. Concept_Router_AFT1) using the data from the results output table8;

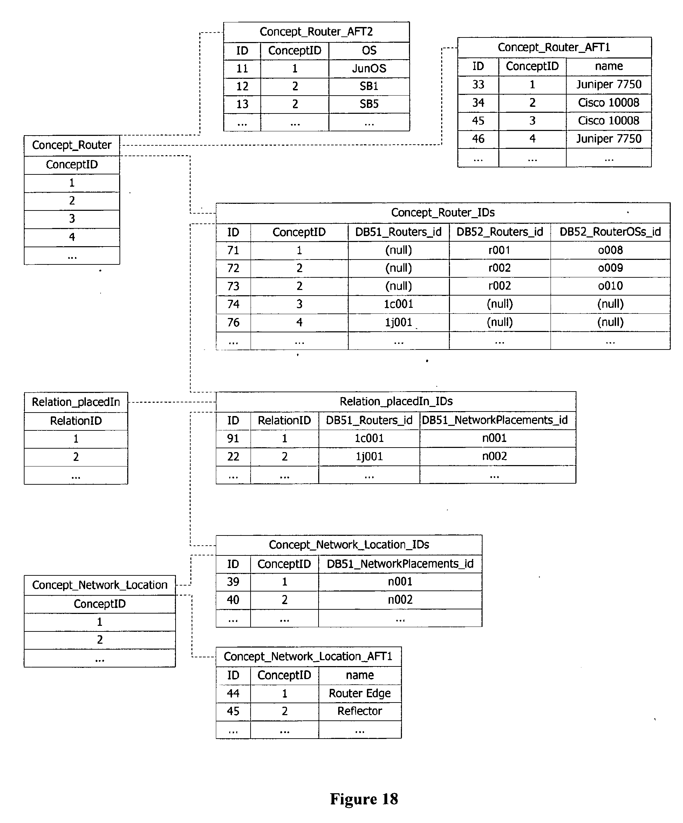

Once this exercise has been completed for all concepts, the virtual A-Box will have fully populated tables. Figure 18 illustrates how the virtual A-box tables of Figure 16 are populated based on executing queries 5.1, 5.2 and 5.3 on databases DB52 and DB51 when they contain the example data shown in Figure 17. The A-box tables populated in this way contain a set of "rough" concept and relation instances. The virtual A-box in Figure 18 shows (the first) four instances of the concept "Router" (two from DB52 and two from DB51), (the

This is done by identifying the first PK in the PKFKs set of the SDCM if present, or otherwise by taking the PK from the PKs set of the SDCM (there should be only one PK in the PKs set if there is no PKFKs set). the content of the primary key columns of the output data (e.g. the first two columns of the above table) is placed into the corresponding columns in the IDs table (e.g. the DB52_Routers_id column and the DB52_RouterOSs_id column of table Concept_Router_IDs in the virtual A-box - see Figures 16 and 18) and appropriate values are inserted into the ID and ConceptID columns (a uniques identification number for each record in the ID column, and the correct value to correctly tie the record to the associated concept instance in the ConceptID column based on the instance driving PK (e.g. in Figure 18 it can be seen that in the Concept_Router_IDs table records 72 and 73 are both associated with PK r002 and thus the ConceptID "2" which corresponds to this PK value is inserted in the ConceptID column for both of these records. This is done by taking the data from the column of the output table with the same name as the column in the AFT table which isn't named ID or ConceptID (e.g. the column "name" in Concept_Router_AFT1 is populated with data from the column "name" in the results table) - duplicate values for a given concept instance are discarded. The ID and ConceptID columns are populated in the same way as for the IDs table.

first) two instances of the relation "placedIn" (from DB51) and (the first) two instances of the concept "Network location" (from DB51.NetworkPlacements). From Figure 18 it can be seen that the virtual A Box has stored therein information about all of the "rough" instances of the concepts and the relation requested by the user in the original request. For each concept that has an attribute or attributes, those attributes are stored in the corresponding AFT tables. Meanwhile, the IDs tables specify each instance of the concepts and relations and identify exactly where each instance is derived from. However, at this stage the instances are "rough" instances since it could be that because of overlapping underlying databases some rough instances are separately identified when in fact they correspond to the same instance. The categorisation and merging of instances is therefore performed in the next step.

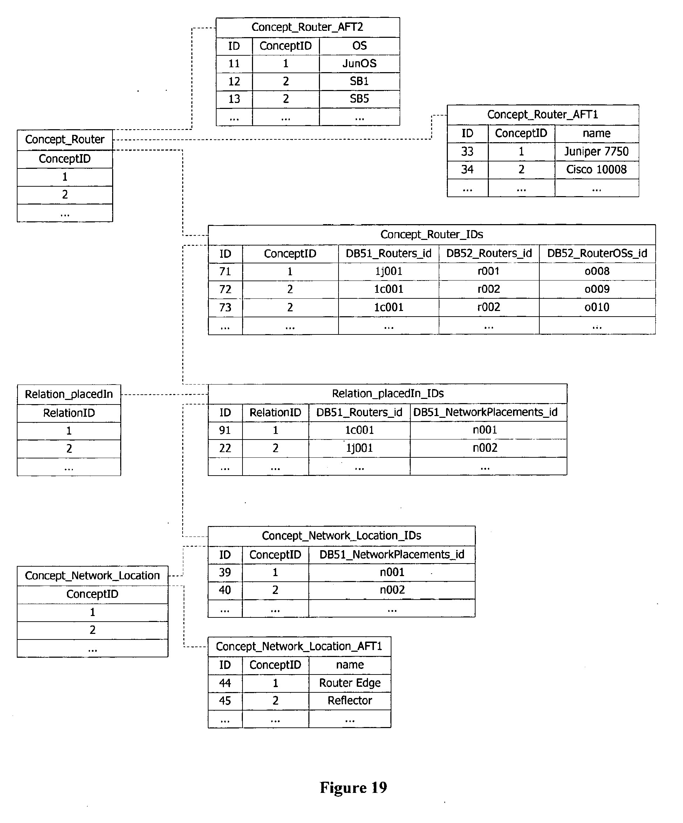

Thus, in the sixth step of the process (step S60 of Figure 3 - refine ontology instances) the semantic identifiers are used to refine the rough instances. This process merges the concept instances related to the same (according to the Categorisation Function(CF) of the SemID as specified by the human user who writes the SemID for a particular concept) entities or instances of the concept (or relation) in question. Figure 19 shows the contents of the virtual A-box after the execution of the semantic identifiers. It can be seen that the concept instances of "router" have been reduced. This is because, in the present example, the semantic identifier defined in the mapping for the concept "router" states that router instances with the same name (i.e. where the name attributes are equal) represent the same entity (although this function is not actually illustrated in Figure 15 which does not actually explicitly show the CFs used, merely the values upon which they depend) such a function could be expressed as -

CF : StringComparison (rc1.name, rc2.name) == 0 AND Ignore(rc1.OS, rc2.OS) whilst the Merge function could be expressed as something like -
MF: StoreFirst(name), StoreDistinct(OS)

It can also be seen that the records in the IDs tables containing the PKs related to the merged concepts, have been merged. The process basically comprises, in the present embodiment, for each group of concept instances categorised as actually being the same instance, including all of the key entries in a temporary merged IDs record, specifying attribute values for the new merged instance using the merging function (in an iterative fashion in the present embodiment such that only two instances are merged in any one merging step, if more than two instances need to be merged) as new merged temporary records for the attributes, deleting all of the old rough instances that are to be merged, assigning the lowest free ConceptID number to the new merged concept records and assigning respective new ID numbers for each record and then inserting these into the respective tables as new merged records.

The above process can be expressed using pseudocode to give an overview of the high-level operation of the algorithm thus:

Categorization

```
01. For each concept rough instance rc
02. begin
03.    For each cluster cl
04.    begin
05.       If cf(rc, rough instance in cl) = true
06.       begin
07.          add rc to cl
08.          skip other comparison and go next rough instance
09.       end
10.    end
11.    create a new cluster cl
12.    add rc to cl
13. end
```

Merging

```
01. For each cluster cl
02. begin
03.   For each rough instance rc
04.   begin
05.     merge data of PK
06.     merge data in AFTs using MF info
07.     remove extra/unused data
08.   end
09. end
```

The effects of this process can be seen in Figure 19.

In the seventh step of the process (step S70 - Perform Optional A-box reasoning) the query has already now been executed, however, optional reasoning over such instances can be done at this stage (in alternative embodiments). An example of the sort of A-box reasoning which might be performed (in alternative embodiments) would include checking instances within the virtual A-box to see if they satisfied certain constraints placed upon the conept at the ontology level. For example, a constraint may have been placed upon the definition of Router to specif that it must contain at least two IP addresses. If IP address were an attribute of the Router instances obtained from the underlying data-sources the A-box reasoning could involve checking the number of distinct values for the attribute IP address for each instance and deleting form the A-box those instances which did not satisfy the criteria of containing at least two or more distinct values for the attribute IP address.

The result of the query (and any optional A-box reasoning) is now stored in a virtual A-Box and can be directly used as it is, through a proper interface system, or it can be translated into a typical ontology language such as RDF or OWL. The final presentation of the results to the user forms the final eighth step of the process (S80 of Figure 3 - Present Results). This is generally controlled by whatever system the user is using to interface with the Data Integration System and is not critical to the operation of the present embodiment as regards the present invention. There are a large number of different ways in which the user could interact with the system. For example, the user could simply view the information using a program for viewing relational databases in which case the A-box tables can be viewed and manipuylated by the user directly. Alternatively some sort of specialised ontology viewer application could be used in which case the A-box info should be converted into the correct format for that ontology viewer (e.g. into OWL for use with an OWL viewer). Depending on the exact type of system used, a post processing step could take the information provided by the A-box tables and extract from it just the information required to answer the exact query and then present that information to the user in a style as determined by that system. This sort of processing is straightforward given the information contained in the virtual A-box tables.

## VARIATIONS

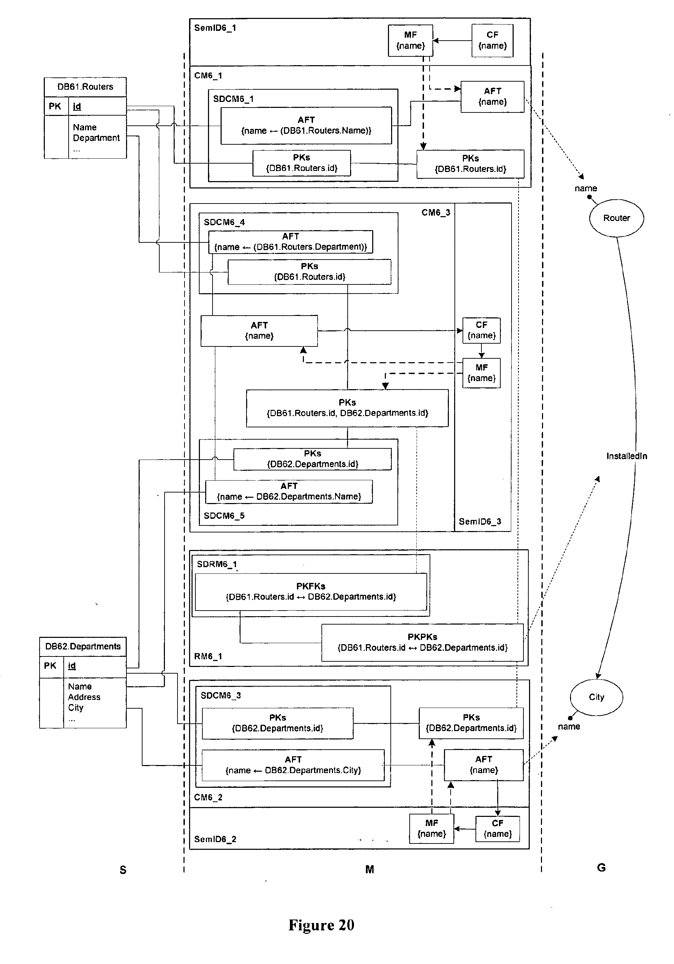

In the above described embodiment the mapping works of relations only works where both of the concepts which are related by the relation are contained in the same underlying data source (though more than one data source may contain both concepts in which case, all such data sources may be mapped to using multiple SDRMs each of which maps to a single data-source. However, in alternative embodiments, it is straightforward to map relations between concepts even when separate data sources contain the underlying data storing the related concepts. A preferred approach to achieving this is shown in Figure 20 in which a new virtual concept is created whose sole function is to join the related concepts. In the mapping (as created by the human mapper in the present example) a link is inserted between the RM for the relation and the new virtual concept. When processing the RM to generate the tables required for the Relation in the A-box, the normal process is followed and a table equivalent to the Relation_placedIn_IDs table of Figures 16, 18 and 19 is created (e.g. for the mapping shown in Figure 20 the table Relation_InstalledIn_IDs would be created in the virtual A-box with a PK column ID, an FK3 column RelationID an FK1 column DB61.Routers.id and an FK2 column DB62.Departments.id); however, no attempt is made to populate this table because of the link between the RM (e.g. RM6_1 of Figure 20) and the virtual concept CM (e.g. CM6_3 of Figure 20). Instead, the A-box tables for the virtual concept are generated, populated and merged in the normal way - whereby the merging process uses the SemID which has been generated (by the human mapper) so as to identify records from one of the tables being linked as corresponding to records form the other table to be linked according to an appropriate semantic join (e.g. in Figure 20 the SemID specifies that records from DB61.Routers are to be merged with records from DB62.Departments where the Department column of the former matches the Name column of the latter. This provides a join and results in an IDs table having the correct ID information to link the tables together appropriately. This information can then simply be copied directly into the IDs table associated with the Relation in the virtual A-box and the process is completed.

This process can be thought of as creating a virtual single data source which appears somewhat like a single data source and thus enables a single SDRM to relate the concepts even though the actual underlying data sources are distinct.

It is possible to extend this approach to enable multiple combinations of different tables to be semantically joined and then a single RM can be used to map to the multiple different tables. For example if there were four underlying databases two of which contained router type information along the lines of DB61 (e.g. DB61 and DB63) and two of which contained department info along the lines of DB62 (e.g. DB62 and DB64) a single CM for a virtual concept linking all four of these together could be created and then the Relation mapping could link to this virtual concept and the resulting virtual A-box would contain the correct table with the correct info for relating the various concepts together regardless of which data source the underlying data is extracted from. In mathematical notation, the composition of the CM's and RM's etc. would be approximately as follows:

db63 and db61 /router info
db62 and db64 /department info
cm61 (router, {db61, db63 }) will contain 2 sdcm = {sdcm61(router, db61),sdcm62(router, db63)}
cm62(city, {db62, db64}) will contain 2 sdcm = {sdcm63(city, db62), sdcm64(city, db64)}
cm63(VirtualConcept, { db61, db62, db63, db64)) will contain 4 sdcm =
{sdcm66(VirtualConcept,db62),sdcm67(VirtualConcept, db64), sdcm68(VirtualConcept,db61), sdcm69(VirtualConcept, db63)}
rm61 ((router, city), {db61, db62, db63, db64}) will contain a a sdrm using pk of cm63
cm63 will create a join on the department name and PKs element(with the 4 pk from the tables) containing all the relations between the tables from all the dbs.

## Claims

1. A data integration system comprising:

   a plurality of data sources;
   a mapping system for providing mapping between the data sources and a global ontology, the global ontology comprising a plurality of elements including at least a plurality of concepts, at least some of which include one or more attributes; and
   a user interface;
   wherein the user interface is operable in use to provide an integrated, global view of the data contained in the data sources and to permit a user to interact with the data sources using the global ontology; and
   wherein the mapping system includes a schema mapping portion and a semantic identifier portion, wherein the schema mapping portion includes a plurality of concept mappings at least some of which specify how one or more elements from plural heterogeneous data sources map to a concept of the global ontology, and wherein the semantic identifier portion comprises a plurality of semantic identifiers each of which is operable to specify in terms of the global ontology how to identify and merge duplicate rough instances of concepts of the global ontology derived from data obtained from plural heterogeneous data sources, which duplicate rough instances represent the same actual instance.

2. A system as claimed in claim 1 wherein the user interface is operable to receive a user request expressed in terms of the global ontology and wherein the mapping system is operable to generate a query to each of at least some of the underlying data sources, to receive results from the execution of those queries by the respective underlying data sources, to specify the results of those queries in terms of the global ontology and to store the results of those queries in a set of relational data base tables.

3. A system according to claim 1 or 2 wherein each concept mapping includes one or more single data source concept mappings which specify how one or more elements from a single data source map to a concept of the global ontology and which are modular.

4. A method of integrating data from a plurality of heterogeneous data sources and of executing user entered queries, the method comprising:

   receiving a user query composed in terms of a global ontology;

translating the query into a plurality of data source specific queries using a mapping system;

querying the respective data sources; translating the results of the queries into the global ontology using the mapping system;

identifying and merging duplicate rough instances of concepts of the global ontology resulting from the queries using a predefined semantic identifier expressed in terms of the global ontology; and

presenting the results of the queries to the user after merging of duplicate rough instances;

wherein the mapping system includes a schema mapping portion and a plurality of semantic identifiers, wherein the schema mapping portion includes a plurality of concept mappings at least some of which specify how elements from a plurality of heterogeneous data sources map to a concept of the global ontology, and wherein each semantic identifier is operable to specify in terms of the global ontology how to identify and merge duplicate rough instances of concepts of the global ontology derived from data obtained from plural heterogeneous data sources.

5. Processor implementable instructions for causing a digital processor to carry out the method of claim 4.

6. Carrier means carrying the processor implementable instructions of claim 5.

EP 2 365 447 A1

**Figure 1**

**Figure 2**

```
                    ┌─────────────────────┐
                    │        Start        │
                    └─────────────────────┘
                               │
                               ▼
              ╱──────────────────────────────╱
             ╱         Receive query        ╱        S 10
            ╱──────────────────────────────╱
                               │
                               ▼
              ┌──────────────────────────────┐
              │       Perform T-Box          │      S 20
              │       query analysis         │
              └──────────────────────────────┘
                               │
                               ▼
              ┌──────────────────────────────┐
              │       Generate queries       │      S 30
              └──────────────────────────────┘
                               │
                               ▼
              ┌──────────────────────────────┐
              │       Execute queries        │      S 40
              └──────────────────────────────┘
                               │
                               ▼
              ┌──────────────────────────────┐
              │       Generate rough         │      S 50
              │      ontology instances      │
              └──────────────────────────────┘
                               │
                               ▼
              ┌──────────────────────────────┐
              │          Refine              │      S 60
              │      ontology instances      │
              └──────────────────────────────┘
                               │
                               ▼
              ┌──────────────────────────────┐
              │       Perform optional       │      S 70
              │       A-Box reasoning        │
              └──────────────────────────────┘
                               │
                               ▼
              ╱──────────────────────────────╱
             ╱        Present results       ╱        S 80
            ╱──────────────────────────────╱
                               │
                               ▼
                    ┌─────────────────────┐
                    │         End         │
                    └─────────────────────┘
```

Figure 3

| DB1.Routers | |
|---|---|
| **PK** | **id** |
| | Vendor |
| | Model |
| | ... |

| DB1.Router_OS | |
|---|---|
| **PK,FK1** | **idRouter** |
| **PK,FK2** | **idOS** |
| | |

| DB1.RouterOSs | |
|---|---|
| **PK** | **id** |
| | Name |
| | Version |
| | ... |

1..*                    1..*

**Figure 4**

| DB1.Routers | | | |
|---|---|---|---|
| id | Vendor | Model | ... |
| 0011 | Cisco | 10008 | ... |
| 0012 | Juniper | 7750 | ... |

**Figure 5**

**Figure 6**

Mapping {

SCHEMA MAPPING {

Concept Mapping (on all the databases) $CM(c_1, \{D_1, .. ,D_n\})$ {

Concept Mapping (on a single database) $SDCM(c_1,D_1)$

. . .

Concept Mapping (on a single database) $SDCM(c_1,D_n)$

. . . .

Concept Mapping (on all the databases) $CM(c_n, \{D_1, .. ,D_n\})$ {

Concept Mapping (on a single database) $SDCM(c_n,D_1)$

. . . .

Concept Mapping (on a single database) $SDCM(c_n,D_n)$

Relation Mapping (on all the databases) $RM(r_1, \{D_1, .. , D_n\})$ {

Relation Mapping (on a single database) $SDRM(r_1,D_1)$

. . . .

Relation Mapping (on a single database) $SDRM(r_1,D_n)$

. . . .

Relation Mapping (on all the databases) $RM(r_n, \{D_1, .. , D_n\})$ {

Relation Mapping (on a single database) $SDRM(r_n,D_1)$

. . . .

Relation Mapping (on a single database) $SDRM(r_n,D_n)$

SEMANTIC IDENTIFIER $SemID_1$ {

Classification Function $cf(c_1,((c_1 ,.., c_n), (r_1 ,.., r_n)))$

Merging Function $mf(c_1)$

. . . .

SEMANTIC IDENTIFIER $SemID_n$ {

Classification Function $cf(c_n,((c_1 ,.., c_n), (r_1 ,.., r_n)))$

Merging Function $mf(c_n)$

**Figure 7**

**Figure 8**

**Figure 9**

**Figure 10**

**Figure 11**

**Figure 12**

Figure 13

Figure 14

Figure 15

## Concept_Router

| PK | ConceptID |
|----|-----------|
|    |           |

## Concept_Router_AFT1

| PK | ID |
|----|----|
| FK1 | ConceptID |
|     | name |

## Concept_Router_IDs

| PK | ID |
|----|----|
| FK1 | ConceptID |
|     | DB51_Routers_id |
|     | DB52_Routers_id |
|     | DB52_RouterOSs_id |

## Concept_Router_AFT2

| PK | ID |
|----|----|
| FK1 | ConceptID |
|     | OS |

Relation "placeIn"

## Relation_placedIn

| PK | RelationID |
|----|-----------|
|    |           |

## Relation_placedIn_IDs

| PK | ID |
|----|----|
| FK3 | RelationID |
| FK1 | DB51_Routers_id |
| FK2 | DB51_NetworkPlacements_id |

Concept "Network Location"

## Concept_Network_Location_IDs

| PK | ID |
|----|----|
| FK1 | ConceptID |
|     | DB51_NetworkPlacements_id |

## Concept_Network_Location

| PK | ConceptID |
|----|-----------|
|    |           |

## Concept_Network_Locationr_AFT1

| PK | ID |
|----|----|
| FK1 | ConceptID |
|     | name |

**Figure 16**

### DB52.Routers

| id | Name | ... |
|----|------|-----|
| r001 | Juniper 7750 | ... |
| r002 | Cisco 10008 | ... |
| ... | ... | ... |

### DB52.Router_OS

| idRouter | idOS |
|----------|------|
| r001 | o008 |
| r002 | o009 |
| r002 | o010 |
| ... | ... |

### DB52.RouterOSs

| id | Name | Version | ... |
|----|------|---------|-----|
| o008 | JunOS |   | ... |
| o009 | SB1 | D | ... |
| o010 | SB5 | S | ... |
| ... | ... | ... | ... |

### DB51.Routers

| id | Name | Name | ... |
|----|------|------|-----|
| 1c001 | Cisco | 10008 | ... |
| 1j001 | Juniper | 7750 | ... |
| ... | ... | ... | ... |

### DB51.Router_NP

| idRouter | idNP |
|----------|------|
| 1c001 | n001 |
| 1j001 | n001 |
| ... | ... |

### DB51.NetworkPlacements

| id | Name | ... |
|----|------|-----|
| n001 | Router Edge | ... |
| n002 | Reflector | ... |
| ... | ... | ... |

**Figure 17**

**Concept_Router_AFT2**

| ID | ConceptID | OS |
|----|-----------|------|
| 11 | 1 | JunOS |
| 12 | 2 | SB1 |
| 13 | 2 | SB5 |
| ... | ... | ... |

**Concept_Router_AFT1**

| ID | ConceptID | name |
|----|-----------|------|
| 33 | 1 | Juniper 7750 |
| 34 | 2 | Cisco 10008 |
| 45 | 3 | Cisco 10008 |
| 46 | 4 | Juniper 7750 |
| ... | ... | ... |

**Concept_Router**

| ConceptID |
|-----------|
| 1 |
| 2 |
| 3 |
| 4 |
| ... |

**Concept_Router_IDs**

| ID | ConceptID | DB51_Routers_id | DB52_Routers_id | DB52_RouterOSs_id |
|----|-----------|-----------------|-----------------|-------------------|
| 71 | 1 | (null) | r001 | o008 |
| 72 | 2 | (null) | r002 | o009 |
| 73 | 2 | (null) | r002 | o010 |
| 74 | 3 | 1c001 | (null) | (null) |
| 76 | 4 | 1j001 | (null) | (null) |
| ... | ... | ... | ... | ... |

**Relation_placedIn**

| RelationID |
|------------|
| 1 |
| 2 |
| ... |

**Relation_placedIn_IDs**

| ID | RelationID | DB51_Routers_id | DB51_NetworkPlacements_id |
|----|------------|-----------------|---------------------------|
| 91 | 1 | 1c001 | n001 |
| 22 | 2 | 1j001 | n002 |
| ... | ... | ... | ... |

**Concept_Network_Location_IDs**

| ID | ConceptID | DB51_NetworkPlacements_id |
|----|-----------|---------------------------|
| 39 | 1 | n001 |
| 40 | 2 | n002 |
| ... | ... | ... |

**Concept_Network_Location**

| ConceptID |
|-----------|
| 1 |
| 2 |
| ... |

**Concept_Network_Location_AFT1**

| ID | ConceptID | name |
|----|-----------|-------------|
| 44 | 1 | Router Edge |
| 45 | 2 | Reflector |
| ... | ... | ... |

**Figure 18**

**Concept_Router_AFT2**

| ID | ConceptID | OS |
|----|-----------|-------|
| 11 | 1 | JunOS |
| 12 | 2 | SB1 |
| 13 | 2 | SB5 |
| ... | ... | ... |

**Concept_Router_AFT1**

| ID | ConceptID | name |
|----|-----------|-------------|
| 33 | 1 | Juniper 7750 |
| 34 | 2 | Cisco 10008 |
| ... | ... | ... |

**Concept_Router**

| ConceptID |
|-----------|
| 1 |
| 2 |
| ... |

**Concept_Router_IDs**

| ID | ConceptID | DB51_Routers_id | DB52_Routers_id | DB52_RouterOSs_id |
|----|-----------|-----------------|-----------------|-------------------|
| 71 | 1 | 1j001 | r001 | o008 |
| 72 | 2 | 1c001 | r002 | o009 |
| 73 | 2 | 1c001 | r002 | o010 |
| ... | ... | ... | ... | ... |

**Relation_placedIn**

| RelationID |
|------------|
| 1 |
| 2 |
| ... |

**Relation_placedIn_IDs**

| ID | RelationID | DB51_Routers_id | DB51_NetworkPlacements_id |
|----|------------|-----------------|----------------------------|
| 91 | 1 | 1c001 | n001 |
| 22 | 2 | 1j001 | n002 |
| ... | ... | ... | ... |

**Concept_Network_Location_IDs**

| ID | ConceptID | DB51_NetworkPlacements_id |
|----|-----------|----------------------------|
| 39 | 1 | n001 |
| 40 | 2 | n002 |
| ... | ... | ... |

**Concept_Network_Location**

| ConceptID |
|-----------|
| 1 |
| 2 |
| ... |

**Concept_Network_Location_AFT1**

| ID | ConceptID | name |
|----|-----------|-------------|
| 44 | 1 | Router Edge |
| 45 | 2 | Reflector |
| ... | ... | ... |

**Figure 19**

Figure 20

Europäisches
Patentamt

European
Patent Office

Office européen
des brevets

**EUROPEAN SEARCH REPORT**

Application Number

EP 10 25 0453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/177112 A1 (GARDNER STEVE [GB]) 18 September 2003 (2003-09-18) * abstract * * paragraph [0048] - paragraph [0064] * * paragraph [0102] - paragraph [0149] * ----- | 1-6 | INV. G06F17/30 |
| Y | US 2006/248045 A1 (TOLEDANO ZEV [IL] ET AL) 2 November 2006 (2006-11-02) * abstract * * paragraph [0132] - paragraph [0180] * ----- | 1-6 | |
| Y | FARSHAD HAKIMPOUR ET AL: "Resolution of Semantic Heterogeneity in Database Schema Integration Using Formal Ontologies" INFORMATION TECHNOLOGY AND MANAGEMENT, KLUWER ACADEMIC PUBLISHERS, BO LNKD- DOI:10.1007/S10799-004-7777-0, vol. 6, no. 1, 1 January 2005 (2005-01-01) , pages 97-122, XP019207725 ISSN: 1573-7667 * the whole document * ----- | 1-6 | |

TECHNICAL FIELDS SEARCHED (IPC)

G06F

The present search report has been drawn up for all claims

| Place of search | Date of completion of the search | Examiner |
|---|---|---|
| The Hague | 29 July 2010 | Dumitrescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 2 365 447 A1**

**ANNEX TO THE EUROPEAN SEARCH REPORT
ON EUROPEAN PATENT APPLICATION NO.**

EP 10 25 0453

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2010

| Patent document cited in search report | | Publication date | Patent family member(s) | | Publication date |
|---|---|---|---|---|---|
| US 2003177112 | A1 | 18-09-2003 | NONE | | |
| US 2006248045 | A1 | 02-11-2006 | AU | 2004258349 A1 | 27-01-2005 |
| | | | BR | PI0412778 A | 26-09-2006 |
| | | | CA | 2533167 A1 | 27-01-2005 |
| | | | CN | 1856790 A | 01-11-2006 |
| | | | EP | 1654679 A2 | 10-05-2006 |
| | | | WO | 2005008358 A2 | 27-01-2005 |

EPO FORM P0459

For more details about this annex : see Official Journal of the European Patent Office, No. 12/82

39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 02080028 A

**Non-patent literature cited in the description**

• **PATRICK ZIEGLER ; KLAUS R. DITTRICH.** Three Decades of Data Integration - All Problems Solved?. *proceedings of the World Computer Congress 2004 - WCC 2004,* 2004, 3-12